# EUROPÄISCHE PATENTSCHRIFT

(11) **EP 2 787 320 B1**
(45) Veröffentlichungstag und Bekanntmachung des Hinweises auf die Patenterteilung: **20.09.2017**
(21) Anmeldenummer: 13162569.1
(22) Anmeldetag: 05.04.2013
(51) Int. Cl.: G01C 15/00, G01B 11/14

(54) **Totalstation mit Scanfunktionalität und wählbaren Scanmodi**
Total station with scan functionality and selectable scan modi
Station totale avec fonctionnalité de balayage et modes de balayage sélectionnables

(43) Veröffentlichungstag der Anmeldung: 08.10.2014
(73) Patentinhaber: Leica Geosystems AG, 9435 Heerbrugg (CH)
(72) Erfinder: Zogg, Hans-Martin, 8592 Uttwil (CH); Lengweiler, Patrik, 7304 Maienfeld (CH); Natau, Robert, 9012 St. Gallen (CH); Stuzt, Reto, 9442 Berneck (CH)
(74) Vertreter: Allwardt, Anke

(56) Entgegenhaltungen:
- EP-A2- 1 342 989
- US-A1- 2002 065 620
- US-A1- 2012 224 164
- C.HUG, A.ULLRICH, A.GRIMM: "Litemapper-5600 - a waveform-digitizing Lidar Terrain and Vegetation Mapping System", INTERNATIONAL ARCHIVES OF PHOTOGRAMMETRY, REMOTE SENSING AND SPATIAL INFORMATION SCIENCES, Bd. XXXVI, 3. Oktober 2004 (2004-10-03), - 6. Oktober 2004 (2004-10-06), Seiten 24-29, XP002712325,
- MICHAEL SCHERER ET AL: "From the Conventional Total Station to the Prospective Image Assisted Photogrammetric Scanning Total Station: Comprehensive Review", JOURNAL OF SURVEYING ENGINEERING, AMERICAN SOCIETY OF CIVIL ENGINEERS, RESTON, VA, US , vol. 135, no. 4 1 January 2009 (2009-01-01), pages 173-178, XP008182022, ISSN: 0733-9453, DOI: 10.1061/(ASCE)0733-9453(2009)135:4(173) Retrieved from the Internet: URL:http://ascelibrary.org/doi/abs/10.1061 /%28ASCE%290733-9453%282009%29135:4%28173% 29 [retrieved on 2009-10-15]

## Beschreibung

Die Erfindung betrifft eine Totalstation nach dem Oberbegriff des Anspruchs 1, ein Verfahren nach Anspruch 9 sowie ein Computerprogrammprodukt nach Anspruch 14.

Moderne Totalstationen weisen in der Regel eine kompakte und integrierte Bauweise auf, wobei meist neben der Anziel- bzw. Visiereinrichtung eine koaxial zur Anziel- bzw. Visiereinrichtung ausgelegte Entfernungsmesseinheit sowie Rechen-, Steuer- und Speichereinheiten in einem Gerät vorhanden sind. Des Weiteren ist im Allgemeinen eine Motorisierung der Anziel- bzw. Visiereinrichtung integriert. Aus dem Stand der Technik bekannte Totalstationen können weiters über eine Funkdatenschnittstelle verfügen zum Aufbau einer Funkverbindung zu externen Peripheriekomponenten wie z.B. zu einem handhaltbaren Datenerfassungsgerät, welches insbesondere als Datenlogger oder Feldrechner ausgebildet sein kann.

Als Anziel- bzw. Visiereinrichtung ist in der Regel ein Zielfernrohr bzw. ein optisches Teleskop vorgesehen. Das Zielfernrohr ist im Allgemeinen um eine vertikale Schwenkachse und um eine horizontale Kippachse relativ zu einer Basis der Totalstation drehbar, sodass das Fernrohr durch Schwenken um wenigstens eine der beiden Achsen auf den zu vermessenden Punkt ausgerichtet werden kann.

Daneben können Scanfunktionalitäten in Totalstationen als Zusatzfunktionen integriert sein. Die Scanfunktionalität kann dabei beispielsweise zur Erfassung der Topographie eines Objekts bzw. seiner Oberflächen wie z.B. der eines Bauwerks verwendet werden. Hierzu wird das Objekt bzw. seine Oberfläche schrittweise mit einem Laserstrahl der in die Totalstation integrierten Entfernungsmesseinheit abgetastet. Zu jedem vom Laserstrahl anvisierten Punkt wird die räumliche Position des Oberflächenpunktes erfasst, indem durch den Entfernungsmesseinheit die Entfernung zum angezielten Oberflächenpunkt gemessen und diese Messung mit den Winkelinformationen der Laseremission verknüpft werden. Moderne Totalstationen verfügen über schnellere Scanfunktionalitäten im Vergleich zu solchen Geräten früher Generationen, wobei mit verbesserten (schneller ansteuerbaren und schneller agierenden, leistungsfähigeren) Steuerungsmotoren eine schnellere und präzisere Ausrichtung der Anzieleinheit erzielt werden kann. Dadurch ist es möglich eine Vielzahl von Punkten in einem vordefinierten Scanbereich in relativ kurzer Zeit zu erfassen und eine entsprechende Punktwolke zu erzeugen. Die Dokumente US 2010/0070229 A1 und US 2012/224164 A1 offenbaren eine Totalstation mit Scanfunktionalität sowie ein Scanverfahren zum Vermessen eines Scanbereichs eines Objekts. Das Scanverfahren umfasst die Einteilung des Scanbereichs in nebeneinander liegende Unterbereiche, wobei jeder Unterbereich eine definierte Anzahl zu vermessender Punkte aufweist. Beim Vermessen von Punkten in einem neuen Unterbereich werden jeweils Punktinformationen wenigstens eines korrespondierenden Messpunktes, der in einem zuvor vermessenen, benachbarten Unterbereich vermessen wurde, verwendet. Auf diese Weise soll eine hohe Messgenauigkeit und eine schnelle grossflächige Oberflächenvermessung ermöglicht werden.

Aufgabe der vorliegenden Erfindung ist es, eine Totalstation und ein Scanverfahren bereitzustellen, welche eine schnelle, genaue und grossflächige Oberflächenvermessung eines Objekts erlauben, dabei sehr bedienungsfreundlich und einfach in der Handhabung sind.

Diese Aufgabe wird durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Die Totalstation verfügt über eine Basis, einen auf der Basis angeordneten und relativ zur Basis um eine Schwenkachse schwenkbaren Aufbau und eine im Aufbau angeordnete Anzieleinheit, die relativ zum Aufbau um eine Kippachse, die senkrecht zur Schwenkachse steht, schwenkbar ist. Des Weiteren umfasst die Totalstation eine elektrooptische Entfernungsmesseinheit zur Entfernungsmessung zu Punkten auf einem Objekt. Die Entfernungsmesseinheit weist eine Emissionseinheit auf z.B. eine Laserlichtquelle, zur Emission einer gepulsten Messstrahlung, die mittels der Anzieleinheit aussendbar ist, sowie einen Detektor zum Empfang der an den Punkten auf dem Objekt reflektierten Messstrahlung. Der Detektor erfasst dabei die reflektierte Messstrahlung in Form von Messsignalen. Zudem verfügt die Totalstation über eine Winkelmesseinrichtung z.B. Winkelencoder, zur Bestimmung der Winkelstellung in Schwenkachse und Kippachse sowie eine Steuerungs- und Verarbeitungseinheit zur Datenverarbeitung und Steuerung der Totalstation. Des Weiteren verfügt die Totalstation über eine Scanfunktionalität, die mittels der Steuerungs- und Verarbeitungseinheit die Entfernungsmesseinrichtung und die Anzieleinheit derart steuert, dass die Entfernungsmessung scannend ausführbar ist, wobei innerhalb der Scanfunktionalität mittels einer Auswerteeinheit die so erhaltenen Messsignale auswertbar sind, indem aus den Messsignalen eine Entfernung zum Objekt ermittelt wird und dieser Entfernung zwei Raumwinkel (vertikal und horizontal entsprechend der Winkelstellung der Anzieleinheit) zugeordnet werden, so dass die Messsignale in einen Scanpunkt überführt werden. Aus diesen Scanpunkten ist schliesslich eine das Objekt darstellende Punktwolke generierbar.

Erfindungsgemäss ist die Entfernungsmesseinheit der Totalstation derart konfiguriert, dass die Entfernungsmessung mittels Laufzeitmessung und Waveform Digitizing durchführbar ist. Ausserdem verfügt die Totalstation über eine wenigstens zwei Scanmodi bereitstellende Programmspeichereinheit, wobei sich die wenigstens zwei Scanmodi wenigstens in ihrer Messrate, d.h. in der Anzahl der ermittelten Scanpunkte pro Zeiteinheit unterscheiden. Dabei ist die Messgenauigkeit, das heisst die Anzahl der aufkumulierten Messsignale, aus denen für einen Scanpunkt eine Entfernung ermittelt wird umso höher, je geringer die Messrate ist. Auch die Entfernungen zu einem zu vermessenden Objekt können umso größer gewählt werden, je geringer die Messrate ist. Dabei wird von einer üblicherweise bei Scanfunktionalitäten in Totalstationen verwendeten konstanten Pulsrate der Messstrahlung ausgegangen.

Das Waveform Digitizing (WFD) basiert auf der Kombination von zwei in der Entfernungsmessung üblichen Grundprinzipien zur Signaldetektion. Das erste Grundprinzip basiert auf der Messsignaldetektion anhand der Schwellwertmethode und das zweite Grundprinzip auf der Signalabtastung mit nachgeschalteter Signalverarbeitung zur Identifikation und zeitlichen Lagebestimmung des Signals. Die Laufzeit und damit die Distanz zwischen einem von der Emissionseinheit ausgesandten Messpuls und einem Zielpuls (vom Zielobjekt reflektierter und vom Detektor detektierter Messpuls) folgen beispielsweise aus dem zeitlichen Abstand der Scheitelpunkte der beiden Pulse, wobei die Pulse ähnlich wie bei Phasenmessern abgetastet werden. Mittels einer erfindungsgemässen Totalstation mit WFD ist gegenüber den im Stand der Technik bekannten Totalstationen eine genauere und schnellere Entfernungsmessung und somit eine Verkürzung der Gesamtscandauer für den gleichen Scanbereich erzielbar.

In einer bevorzugten Ausführungsform der Erfindung ist die Anzieleinheit im Rahmen der Scanfunktionalität um die Kippachse und/oder Schwenkachse derart schwenkbar, das die emittierte Messstrahlung zumindest schwenkbar um eine der beiden Achsen kontinuierlich ausrichtbar ist. Durch das kontinuierliche Verschwenken bzw. Ausrichten der Messstrahlung lässt sich die Messgeschwindigkeit gegenüber herkömmlichen, schrittweise arbeitenden Scanverfahren erhöhen und somit die Gesamtscandauer vermindern. Dabei möglicherweise entstehende Störungen im Zielpuls (Verschmieren des auftreffenden und reflektierten Pulses auf der Oberfläche des Objekts aufgrund der während des Auftreffens weitergeführten Scanbewegung), können bei bekannter Entfernung zum Objekt durch eine auf diese Entfernung angepasste Winkelgeschwindigkeit der Anzieleinheit - mittels derer die Messstrahlung über das Objekt geführt wird - ausgeglichen werden. Sind neben der Entfernung zum Objekt weitere Parameter, wie Gesamtscandauer oder Auflösung, zum Beispiel durch den Nutzer vorgegeben worden, so wird eine im Sinne dieser Parameter und der Entfernung optimierte Winkelgeschwindigkeit von der Steuer- und Verarbeitungseinheit eingestellt.

Auch das WFD leistet einen Beitrag zur besseren Auswertbarkeit dieser "verschmierten" Signale. In einer weiteren bevorzugten Ausführungsform der Erfindung werden mittels der Programmspeichereinheit wenigstens zwei Scanmodi bereitgestellt; ausgewählt aus einer Gruppe von Scanmodi wenigstens enthaltend:
- Scanmodus 0 mit einer Messrate von 100'000 Scanpunkten pro Sekunde, wobei pro Sekunde 100'000 Mal aus den jeweils innerhalb einer Zeitperiode von 0.00001s aufkumulierten Messsignalen eine Entfernung ermittelt und diese in einen Scanpunkt (Entfernung und Raumwinkel) überführt wird
- Scanmodus 1 mit einer Messrate von 1000 Scanpunkten pro Sekunde, wobei pro Sekunde 1000 Mal aus den jeweils innerhalb einer Tausendstelsekunde aufkumulierten Messsignalen eine Entfernung ermittelt und diese in einen Scanpunkt (Entfernung und Raumwinkel) überführt wird;
- Scanmodus 2 mit einer Messrate von 250 Scanpunkten pro Sekunde wobei pro Sekunde 250 Mal aus den jeweils innerhalb einer Zweihunderfünfzigstelsekunde aufkumulierten Messsignalen eine Entfernung ermittelt und diese in einen Scanpunkt (Entfernung und Raumwinkel) überführt wird;
- Scanmodus 3 mit einer Messrate von 62 Scanpunkten pro Sekunde, wobei pro Sekunde 62 Mal aus den jeweils innerhalb einer Zweiundsechzigstelsekunde aufkumulierten Messsignalen eine Entfernung ermittelt und diese in einen Scanpunkt (Entfernung und Raumwinkel) überführt wird;
- Scanmodus 4 mit einer automatischen Anpassung der Messrate an die aktuell gemessene Entfernung zum Objekt.

Als Raumwinkel werden dabei in der Regel der horizontale und der vertikale Raumwinkel für den Scanpunkt abgespeichert, der die Mitte repräsentiert von der Wegstrecke, die der Messtrahl während der Zeitperiode zurücklegt, während derer die erfassten Messignale für den Entfernungsmesswert aufkumuliert werden. Für die oben aufgeführten Scanmodi 1 bis 3 beträgt die fixe Pulsrate der ausgesandten Messstrahlung vorzugsweise 1 bis 2 Millionen Pulse pro Sekunde. Denkbar sind aber auch andere fix vorgegebene Pulsraten der ausgesandten Messstrahlung, wobei eine Auswahl solcher fixen Pulsraten ebenfalls in der Programmspeichereinheit hinterlegt sein kann. Die oben gegebenen Scanmodi 0 und 1 stellen bei dieser Pulsrate Scanmodi dar, die im Hinblick auf die Gesamtscandauer einen sehr schnellen Scan erlauben, dafür natürlich weniger genau sind und auch nur für relativ kurze Entfernungen zum Objekt von bis zu 150 oder 200m (Scanmodus 0) bzw. 300 oder 350m (Scanmodus 1) geeignet ist. Scanmodus 2 stellt eine optimierte Lösung betreffend Scangeschwindigkeit und Objektdistanz dar und liefert sinnvolle, d.h. hinreichend genaue Ergebnisse bei Objektdistanzen bis zu 400/450m; und Scanmodus 3 stellt eine optimierte Lösung betreffend Objektdistanz und Genauigkeit dar und ist sinnvoll einsetzbar bis etwa 500m oder 600m. Bezüglich der Objektdistanz spielt natürlich auch die Reflektivität der Oberfläche des Objekts eine Rolle. Bei gut reflektierenden, glatten Oberflächen kann die Distanz ein wenig grösser gewählt werden als bei schlecht reflektierenden und/oder rauen Oberflächen.

Neben den oben beschriebenen Scanmodi können in der Programmspeichereinheit natürlich noch weitere Scanmodi hinterlegt sein, welche beispielsweise weitere Messraten zur Verfügung stellen wie eine Messrate von mehr als 100'000 Scanpunkten pro Sekunde, von 50'000 Scanpunkten pro Sekunde, 500 Scanpunkten pro Sekunde, eine Messrate von 125 Scanpunkten pro Sekunde, oder für das Ausmessen von einzelnen Punkten oder sehr weit, z.B. 1km, entfernten Objekten eine Messrate von 1 Scanpunkt pro Sekunde, was einer Messung im "Stop and go" (Einzelpunktmessung) Verfahren entspricht. Auch kann vorgesehen sein, dass der Nutzer eine von diesen Messraten abweichende Messrate selber programmiert und in der Programmspeichereinheit als Scanmodus hinterlegt. Auch andere Scanmodi, welche z.B. verschiedene, fix vorgegebene oder auch dynamische Auflösungsraten vorgeben, oder verschiedene, fix vorgegebene Auflösungsraten in Kombination mit definierten fix vorgegebenen Messraten können in der Programmspeichereinheit hinterlegt sein.

Als ein weiterer Scanmodus kann auch eine Messung mit Konstanter Auflösung, d.h. mit konstanter Messpunktdichte pro ausgemessener Scanwegstrecke bzw. ausgemessener Fläche, in der Programmspeichereinheit hinterlegt sein. Bei diesem Scanmodus erfolgt eine kontinuierliche adaptive Anpassung der Winkelgeschwindigkeit der Anzieleinheit abhängig von der Entfernung zum zu vermessenden Objekt, so dass die Messpunktdichte für eine zu scannende Fläche während des Scanvorgangs auch bei sich verändernden Entfernungen zu dem Objekt, z.B. bei einer komplexen Gebäudestruktur, konstant bleibt. Die Entfernung zum zu vermessenden Objekt wird dabei während des Scans kontinuierlich (mit jedem Messpuls) oder in kurzen Abständen immer wieder bestimmt (jeder dritte, fünfte, zehnte etc. Messpuls je nach Pulsrate).

Ebenso kann ein Standardscanbereich in der Programmspeichereinheit hinterlegt sein. Dies ist vorteilhaft in Messgeräten mit denen häufig ein gleicher Scanbereich vermessen werden soll (z.B. häufig full-dome Aufnahmen oder 180° Scans). Wird vom Nutzer kein Scanbereich angegeben kann die Steuer- und Verarbeitungseinheit immer auf diesen Standardscanbereich zurückgreifen. Auch können verschiedene häufig verwendete Scanbereiche in der Programmspeichereinheit hinterlegt sein und dem Nutzer, zum Beispiel wenn er selbst keinen Scanbereich angibt, zur Verfügung gestellt werden, damit er daraus einen auswählt. Ebenfalls denkbar ist, dass der Nutzer aus den vorgeschlagenen Scanbereichen einen Scanbereich als Standardscanbereich definiert, dass er selber Scanbereiche definiert und als wählbare Scanbereiche in der Programmspeichereinheit abspeichert oder auch selber einen Standardscanbereich programmiert und in der Programmspeichereinheit abspeichert.

Damit der Nutzer selber Scanmodi definieren kann sind in einer weiteren Ausführungsform Bedieneinheit und Programmspeichereinheit entsprechend ausgelegt. Häufig vom Nutzer für seine speziellen Zwecke in einem Scan benötigte Kombinationen von Parametern können auf diese Weise von ihm selbst in Form eines eigenen Scanmodus programmiert und in der Programmspeichereinheit abgespeichert werden.

Da die erfindungsgemässe Totalstation, wenn eine hohe Effizienz erreicht werden soll, kontinuierliche Scanbewegungen ausführt, kommt es mit zunehmender Entfernung zu dem zu vermessenden Objekt bzw. mit zunehmender Scangeschwindigkeit zu einem stärkeren "Verschmieren" der auftreffenden und reflektierten Pulse auf der Oberfläche des Objekts. Bildlich gesprochen entsteht auf dem Objekt statt eines "punktförmigen Messflecks", auf dem eine gewisse Anzahl Laserpulse, deren Messignale für einen Scanpunkt aufakkumuliert werden, auftrifft und von dem sie reflektiert werden, ein länglicher eher "ovaler Messfleck" dessen Ausdehnung (= Verschmierung in cm) umso größer wird je weiter das Objekt von der Totalstation entfernt ist bzw. je schneller die kontinuierliche Scanbewegung des Laserstrahls (= Winkelgeschwindigkeit der Anzieleinheit) ist. Dies hat eine Verringerung der Messgenauigkeit für den entsprechenden Scanpunkt zur Folge. Erfindungsgemäss ist daher die Steuer- und Verarbeitungseinheit so konfiguriert, dass die Winkelgeschwindigkeit der Anzieleinheit an die Entfernung bzw. den Scanmodus der bei einer bestimmten Entfernung sinnvoll genutzt werden kann angepasst ist. So ist beispielsweise bei einer Messrate von 1000 Scanpunkten pro Sekunde (Scanmodus 1 geeignet für Distanzen bis zu 300m/350m) die Winkelgeschwindigkeit schneller als bei einer Messrate von 250 Scanpunkten pro Sekunde (Scanmodus 2 geeignet für Distanzen bis zu 400m/450m). Des Weiteren ist die Steuer- und Verarbeitungseinheit so konfiguriert, dass sie dem Nutzer aus den durch die Programmspeichereinheit bereitgestellten Scanmodi nur sinnvolle Scanmodi zur Verfügung stellt, d.h. Scanmodi mit einer "Verschmierung" die bei der erwarteten Distanz zum Objekt noch sinnvolle Entfernungs- und Raumwinkeldaten für einen Scanpunkt ergeben.

Als sinnvolle Grenzwerte für das Verschmieren (und somit eine hinreichende Genauigkeit bzw. Auflösung) haben sich beispielsweise für eine konstante Messdistanz von 200m folgende Werte herausgestellt:
für eine Messrate von 1000Hz, also 1000 Scanpunkte pro Sekunde, eine Verschmierung von etwa 25cm;
für eine Messrate von 250Hz eine Verschmierung von etwa 17cm; und
für eine Messrate von 62Hz eine Verschmierung von etwa 12cm bis 13cm.

Dabei wird, wie bereits oben erläutert, unter Verschmierung die Wegstrecke verstanden, die der Messstrahl bei der vorgegebenen Messrate jeweils in einer Zeitperiode überstreicht, in der Messsignale für einen Entfernungsmesswert aufakkumuliert werden.

Für kleinere Distanzen ergeben sich für die verschiedenen Messraten (Scanmodi) entsprechend kleinere Grenzwerte für die Verschmierungen, beispielsweise für 1000Hz bei einer Distanz von 100m eine Verschmierung von etwa 13cm.

Sind dem Nutzer wenigstens zwei Scanmodi aus den in der Programmspeichereinheit bereitgestellten Scanmodi zur Verfügung gestellt worden, wählt der Nutzer einen Scanmodus aus. Die Auswahl eines bestimmten Scanmodus durch den Nutzer kann beispielsweise in Abhängigkeit von der Entfernung zu dem zu scannenden Objekt und/oder abhängig von bestimmten Anforderungen an den Scanvorgang z.B. hinsichtlich Messgeschwindigkeit oder Messgenauigkeit erfolgen.

Damit der Nutzer jeweils weiß in welchem Scanmodus die Totalstation arbeitet, kann diese Information entweder automatisch oder auf Nachfrage durch den Nutzer auf einem Display einer Bedieneinheit der Totalstation angezeigt werden.

In einer weiteren bevorzugten Ausführungsform der Erfindung weist die Totalstation eine Bedieneinheit auf zum Eingeben wenigstens eines Parameters, wobei der Parameter folgendes sein kann: eine geschätzte oder gemessene Entfernung zum Objekt, eine Pulsrate der Messstrahlung, ein Scanbereich, eine Winkelgeschwindigkeit der Anzieleinheit, eine Auflösung oder eine Gesamtscandauer. Die Begriffe "Gesamtscandauer" und "Scandauer" werden hier synonym verwendet und umfassen einen Zeitraum von Messbeginn, d.h. von Beginn der Erfassung von Messsignalen, bis zum Ende der Messung.

In einer Ausführungsform der Erfindung ist die mit der Bedieneinheit und der Programmspeichereinheit gekoppelte Steuerungs- und Verarbeitungseinheit derart konfiguriert, dass das automatische Zur-Verfügung-Stellen wenigstens eines Scanmodus aus den wenigstens zwei durch die Programmspeichereinheit bereitgestellten Scanmodi in Abhängigkeit von dem eingegebenen wenigstens einen Parameter erfolgt. Das bedeutet, es werden mittels der Steuerungs- und Verarbeitungseinheit aus den von der Programmspeichereinheit bereitgestellten Scanmodi die zusammen mit diesen Parametern sinnvollen Scanmodi bestimmt, d.h. die Scanmodi, die unter diesem Parametern ein sinnvolles Scanergebnis, sprich ein Scanergebnis mit einer hinreichenden Messgenauigkeit und/oder Auflösung erzielen können. Dabei zeichnet sich ein in diesem Sinne sinnvolles Resultat beispielsweise durch eine genügend große Anzahl auswertbarer Messsignale aus und durch eine niedrige Range-Noise. Der Range-Noise ist sinnvoller Weise kleiner als das kleinste aufzulösende Objekt (z.B. Range-Noise im Sub-Millimeter Bereich). Nur diese Scanmodi werden dem Nutzer dann für eine weitere Auswahl zur Verfügung gestellt. In Abhängigkeit von den eingegebenen Parametern können dem Nutzer entweder mehrere auswählbare Scanmodi zur Verfügung gestellt werden, es ist aber auch möglich, dass dem Nutzer nur ein Scanmodus zur Verfügung gestellt wird. Es ist auch denkbar, dass aufgrund der eingegebenen Parameter keiner der von der Programmspeichereinheit bereitgestellten Scanmodi ein zufrieden stellendes Scanergebnis liefert. Für diesen Fall ist es möglich, dass die Steuereinheit so konfiguriert ist, dass der Nutzer beispielsweise über die Bedieneinheit eine entsprechende Meldung erhält, um dann eine Anpassung eines oder mehrerer Parameter durchzuführen.

In einer weiteren bevorzugten Ausführungsform der Erfindung kann mittels der Bedieneinheit neben der Eingabe des wenigstens einen Parameters durch den Nutzer und der Wahl eines Scanmodus auch eine automatische Auswahlfunktionalität ausgewählt werden. Die Auswahl des Scanmodus durch den Nutzer kann entweder aus den von der Programmspeichereinheit bereitgestellten wenigstens zwei Scanmodi erfolgen, d.h. es findet keine Vorselektion der auswählbaren Scanmodi statt. Die Auswahl des Scanmodus kann aber auch aus den Scanmodi erfolgen, die mittels der Steuerungs- und Verarbeitungseinheit aus den von der Programmspeichereinheit bereitgestellten Scanmodi ausgewählt und dem Nutzer zur Verfügung gestellt werden. Zweiteres ist beispielsweise der Fall bei vorangegangener Eingabe eines oder mehrerer Parameter durch den Nutzer mittels der Bedieneinheit oder der Bestimmung eines Parameters durch das Gerät wie z.B. der Entfernung mittels der Entfernungsmesseinheit.

Erfindungsgemäss kann der Nutzer mittels der Bedieneinheit ausserdem die automatische Auswahlfunktionalität auswählen, so dass das Gerät die Auswahl des Scanmodus automatisch durchführt. Die automatische Scanfunktionalität kann entweder von vornherein gewählt werden oder aber nachdem dem Nutzer bestimmte sinnvolle Scanmodi aus den von der Programmspeichereinheit bereitgestellten Scanmodi zur Verfügung gestellt worden sind. Wobei die Auswahl der sinnvollen Scanmodi, die dem Nutzer aus den von der Programmspeichereinheit bereitgestellten Scanmodi zur Verfügung gestellt werden, anhand einer Optimierung hinsichtlich Entfernung zum Objekt, Gesamtmessdauer, Messgenauigkeit und Auflösung erfolgt. Die Winkelgeschwindigkeit der Anzieleinheit wird für jeden Scanmodus über einen Algorithmus von der Steuer- und Verarbeitungseinheit jeweils distanzabhängig automatisch optimiert. Nur solche Scanmodi werden zur Verfügung gestellt die unter diesen Optimierungskriterien noch bezüglich Verschmierung (Messgenauigkeit und Auflösung) hinreichend genaue Resultate liefern (s.o.).

Delegiert der Nutzer die Wahl des Scanmodus an die Totalstation so wählt die Steuer- und Verarbeitungseinheit der Totalstation entweder direkt aus den von der Programmspeichereinheit bereitgestellten Scanmodi oder aus den dem Nutzer bereits als sinnvolle Scanmodi zur Verfügung gestellten Scanmodi, denjenigen Scanmodus aus, der die widerstreitenden Anforderungen bezüglich Gesamtmessdauer, Messgenauigkeit, Auflösung, Distanz unter den gegebenen Bedingungen am besten erfüllt. Bei einem weit entfernten, zu vermessenden Objekt beispielsweise würde die Steuer- und Verarbeitungseinheit in dem oben genannten Beispiel vorzugsweise den Scanmodus 3 auswählen, bei welchem 16 Mal mehr Messpunkte aufkumuliert werden, um einen Scanpunkt zu erhalten, als bei Scanmodus 1. Bei einem nahe gelegenen, zu vermessenden Objekt würde dagegen vorzugsweise der Scanmodus 1 ausgewählt werden, da dieser Modus bei geringer Distanz eine kürzere Gesamtscandauer benötigt aber immer noch eine hinreichende Genauigkeit der Resultate liefert. Es findet also eine Optimierung bezüglich Messdistanz, Gesamtscandauer und Messgenauigkeit statt.

Wird die automatische Auswahlfunktion vor bzw. zu Beginn des Scanvorgangs ausgewählt, läuft die Auswahl des Scanmodus vollautomatisch ab. Das interessierende Objekt wird in einer Art Pre-Scan mit sehr grober Auflösung gescannt und aus diesem Scan ermittelt das Gerät dann automatisch die zur Bestimmung des geeigneten Scanmodus notwendigen Parameter wie z.B. Entfernung zu dem zu vermessenden Objekt, Reflexionsgrad (also Intensität der eintreffenden, vom Objekt reflektierten Pulse), etc. Falls einzelne dieser Daten nicht ermittelbar sein sollten, besteht die Möglichkeit, dass sie vom Gerät z.B. über die Bedieneinheit vom Nutzer abgefragt werden.

Wie oben bereits beschrieben erfolgt die automatische Auswahl des optimal geeigneten Scanmodus aufgrund einer Optimierung hinsichtlich Messdistanz, Messgenauigkeit, Messgeschwindigkeit und Auflösung unter Berücksichtigung von Parametern, die vom Nutzer mittels der Bedieneinheit eingegeben wurden und/oder vom Gerät automatisch ermittelt wurden.

In einer weiteren bevorzugten Ausführungsform der Erfindung werden die erfassten Messsignale online, das heisst während des Scannens ausgewertet und in Scanpunkte für eine Punktwolke überführt. Die Gesamtscandauer beinhaltet in diesem Fall neben der Erfassung der Messsignale auch deren Auswertung und Überführung in Scanpunkte einer Punktwolke. Die während des Scannens erfassten Messsignale gelangen dafür als Rohdaten in einen, insbesondere temporären Zwischenspeicher. Mittels einer Auswerteeinheit werden die Messsignale ausgewertet, d.h. entsprechend des ausgewählten Scanmodus in Scanpunkte für die Punktwolke überführt und in einem Hauptspeicher gespeichert. Wurde der Scanvorgang beispielsweise mit dem Scanmodus 2 durchgeführt, so wird 250 Mal pro Sekunde aus den jeweils in 0.004 Sekunden aufkumulierten Messsignalen die Entfernung ermittelt, die zugehörigen Raumwinkel werden bestimmt und das Ganze wird als Scanpunkt abgespeichert. Auf diese Weise ist es möglich für jeden Scanpunkt im Verhältnis zur Messdistanz sehr genaue Messwerte für die Distanz zu erzielen. Eine aus den so ermittelten Scanpunkten erzeugte Punktwolke benötigt gegenüber dem Speicherplatz, den die Rohdaten beanspruchen würden, im Hauptspeicher nur noch einen Bruchteil an Speicherkapazität. Die Online-Auswertung der erfassten Messpunktdaten beschleunigt das Verfahren und ermöglicht ausserdem eine Darstellung der die Scanpunkte aufweisenden Punktwolke im Feld, also direkt am Vermessungsort und dies unmittelbar nach dem Scan. Nach der Messung muss der Nutzer also nicht auf das Ergebnis und auf die Darstellung als Punktwolke warten. Es ist auch keine Übertragung der während des Scannens erfassten Messpunktdaten auf eine externe Computereinheit notwendig, um die Daten auszuwerten und die Scanpunkte für die Punktwolke zu überführen, wie dies beim post-processing häufig der Fall ist. Es soll hier jedoch nicht ausgeschlossen werden, dass die Auswertung der erfassten Messpunktdaten und Überführung derselben in Scanpunkte für eine Punktwolke in einem post-processing Schritt stattfinden kann.

Ist die Totalstation mit einer Kamera ausgerüstet, welche Bildaufnahmen von dem zu vermessenden Objekt machen kann, so kann während der online Auswertung auch anhand der Kamerabilder eine RGB-Wert Zuordnung zu jedem Scanpunkt erfolgen und der RGB-Wert (Farbwert) zusammen mit den Raumwinkeldaten und den Entfernungsdaten für den Scanpunkt im Hauptspeicher abgelegt werden.

Die Erfindung betrifft ausserdem ein Computerprogrammprodukt mit Programmcode, der auf einem maschinenlesbaren Träger gespeichert ist. Das Computerprogrammprodukt ist zur Steuerung und Durchführung des Scannens zum Erzeugen einer Scanpunkte aufweisenden Punktwolke gemäss einem oben beschriebenen Scanverfahren konfiguriert, insbesondere wenn das Programm auf einer als Steuerungs- und Verarbeitungseinheit einer erfindungsgemässen Totalstation ausgebildeten elektronischen Datenverarbeitungseinheit ausgeführt wird.

Die erfindungsgemässe Totalstation und das erfindungsgemässe Scanverfahren werden nachfolgend anhand von in den Zeichnungen schematisch dargestellten konkreten Ausführungsbeispielen rein beispielhaft näher beschrieben.

Dabei wird auch auf weitere Vorteile der Erfindung eingegangen. Gleiche Elemente in den Zeichnungen sind mit gleichen Bezugszeichen gekennzeichnet. Im Einzelnen zeigen:
- Fig. 1: eine erfindungsgemässe Totalstation und Scannen einer Oberfläche eines Objektes;
- Fig. 2a: ein Objekt mit einem mittels Messsignalreihen abgetasteten Scanbereich, wobei die Messsignalreihen zwecks Auswertung in einem Zwischenspeicher abgelegt werden;
- Fig. 2b-2d: eine graphische Darstellung der Auswertung und Überführung jeweils eines Ausschnitts einer Messsignalreihe in einen entsprechenden Ausschnitt einer Scanpunktreihe für eine Punktwolke bei unterschiedlichen Scanmodi wobei die Auflösung, d.h. die Pulsrate und die Scanbewegung der Anzieleinheit bzw. der Messstrahlung konstant sind;
- Fig. 3a: das Objekt mit Scanbereich aus Fig. 2a;
- Fig. 3b-3d: in analoger Darstellung zu den Figuren 2b bis 2d eine graphische Darstellung von Ausschnitten unterschiedlicher Messsignalreihen aufgenommen an dem Objekt in konstanter Entfernung aber mit unterschiedlicher Auflösung, d.h. mit unterschiedlich schneller Scanbewegung der Anzieleinheit bzw. der Messstrahlung über eine Messstrecke definierter Länge bei gleicher Pulsrate und gleicher Auswertung und Überführung der Messsignale in Scanpunkte für eine Punktwolke;
- Fig. 4: eine graphische Darstellung eines ersten möglichen erfindungsgemässen zur Verfügung stellen eines Scanmodus zur Durchführung eines erfindungsgemässen Scanverfahrens;
- Fig. 5: eine graphische Darstellung eines weiteren möglichen erfindungsgemässen zur Verfügung stellen eines Scanmodus zur Durchführung eines erfindungsgemässen Scanverfahrens;
- Fig. 6: eine graphische Darstellung eines weiteren möglichen erfindungsgemässen zur Verfügung stellen eines Scanmodus zur Durchführung eines erfindungsgemässen Scanverfahrens;
- Fig. 7: eine graphische Darstellung eines weiteren möglichen erfindungsgemässen zur Verfügung stellen eines Scanmodus zur Durchführung eines erfindungsgemässen Scanverfahrens;
- Fig. 8: eine graphische Darstellung eines weiteren möglichen erfindungsgemässen zur Verfügung stellen eines Scanmodus zur Durchführung eines erfindungsgemässen Scanverfahrens;
- Fig. 9: eine graphische Darstellung eines weiteren möglichen erfindungsgemässen zur Verfügung stellen eines Scanmodus zur Durchführung eines erfindungsgemässen Scanverfahrens.

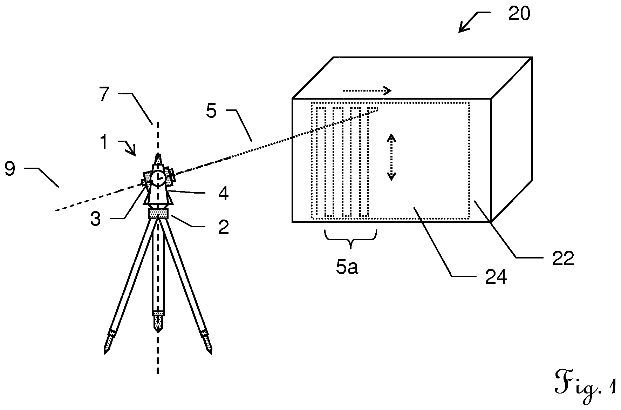

**Figur 1** zeigt eine erfindungsgemässe Totalstation 1 mit einer Basis 2, einem auf der Basis 2 angeordneten Aufbau 4, der relativ zur Basis 2 um eine Schwenkachse 7 schwenk- bzw. drehbar ist, und einer im Aufbau 4 angeordneten Anzieleinheit 3, die relativ zum Aufbau 4 um eine, senkrecht zur Schwenkachse 7 stehende Kippachse 9 schwenk- bzw. rotierbar ist. Die Anzieleinheit 3 ist somit um zwei senkrecht aufeinander stehende Achsen, die Schwenkachse 7 und die Kippachse 9, schwenk- bzw. drehbar. Des Weiteren umfasst die Totalstation 1 eine Entfernungsmesseinheit (nicht dargestellt) mit einer Laserlichtquelle zum aussenden einer gepulsten Messstrahlung 5 und einem Detektor zur Erfassung von reflektierter Messstrahlung, welche der Entfernungsbestimmung zwischen Totalstation und einem interessierenden Objekt dient. Die Messstrahlung 5 wird mittels der Anzieleinheit 3 ausgerichtet und in die Umgebung ausgesandt. Über Winkelencoder (nicht dargestellt), wie sie inzwischen üblicherweise in Totalstationen zur Bestimmung der Winkelstellung in Schwenkachse 7 und Kippachse 9 vorhanden sind, sind die Winkelkoordinaten für jeden ausgesandten bzw. reflektierten Messpuls der Entfernungsmesseinheit bestimmbar. Zudem ist in Figur 1 ein Objekt 20 gezeigt mit einer zu scannenden Oberfläche 22 auf welcher eine gepulste Messtrahlung 5 der Totalstation 1 bereits einen Teil eines Scanbereichs 24 bahnweise abgescannt hat, wobei die Scanbewegung des Messtrahls 5 auf der Oberfläche 22 durch eine gestrichelte Linie 5a angedeutet ist.

Für das Abscannen eines Scanbereichs 24 verfügt die Totalstation 1 über eine Scanfunktionalität, bei deren Ausführung mittels der Anzieleinheit 3 die gepulste Messstrahlung 5 ausgesendet wird, wodurch die Topographie in einem festgelegten Scanbereich 24 der zu scannenden Oberfläche 22 eines Objekts 20 vermessen werden kann. Der Scanbereich 24 entspricht im hier gezeigten Beispiel im Wesentlichen der zu scannenden Oberfläche 22. Durch gezieltes Ausrichten der Anzieleinheit 3 wird die gepulste Messstrahlung 5 derart ausgesendet, dass diese die zu scannende Oberfläche 22 mit einer möglichst kontinuierlichen Bewegung abscannt, was eine Erhöhung der Messgeschwindigkeit gegenüber einer bisher üblichen, schrittweisen Scanbewegung ermöglicht. Die Bewegung der gepulsten Messstrahlung 5a ist im hier gezeigten Beispiel oszillierend, wobei zur Vereinfachung der Darstellung die oszillierende Bewegung 5a der Messstrahlung 5 nur für einen Ausschnitt der zu scannenden Oberfläche 22 gezeigt ist. Die oszillierende Bewegung 5a der Messstrahlung 5 ergibt sich in diesem Beispiel durch ein Abwechseln eines kontinuierlich vertikalen Ausrichtens und schrittweise horizontalen Ausrichtens der emittierten gepulsten Messstrahlung 5 mittels der Anzieleinheit 3. Dazu wird die Anzieleinheit 3 kontinuierlich in einem definierten Winkelbereich um die Kippachse 9 auf und ab verschwenkt und jeweils beim Erreichen des vertikalen Wendepunktes in einem Schritt um einen vordefinierten Winkelbetrag in die gleiche Richtung um die Schwenkachse 7 verschwenkt. Die Schwenkbewegungen der Anzieleinheit 3 um die Schwenkachse 7 und um die Kippachse 9 werden dabei mittels einer Steuerungs- und Verarbeitungseinheit 12 der Totalstation 1 gesteuert.

Neben der im Beispiel gezeigten oszillierenden Bewegung 5a der gepulsten Messstrahlung 5 kann die Messstrahlung 5 beim Ausführen der Scanfunktionalität durch entsprechende Ansteuerung der Anzieleinheit 3 mittels der Steuerungs- und Verarbeitungseinheit 12 auch jede andere Bewegung ausführen, um den ausgewählten Scanbereich 24 zu erfassen. Insbesondere kann sowohl das Verschwenken um die Kippachse 9 als auch um die Schwenkachse 7 kontinuierlich erfolgen und je nach Anforderung kann auch das Schwenken um die Kippachse 9 statt das Schwenken um die Schwenkachse 7 diskontinuierlich erfolgen. Ist der Scanbereich 24 beispielsweise eine horizontale Linie, so erfolgt eine kontinuierliche, horizontale Ausrichtung der Anzieleinheit 3 durch kontinuierliches Schwenken der Anzieleinheit 3 in eine Richtung um die Schwenkachse 7, was mittels der Steuerungs- und Verarbeitungseinheit 12 gesteuert wird.

Für bestimmte Anforderungen, wie beispielsweise Einzelpunktmessungen oder Messungen von weit voneinander beabstandeten Punkten oder Messungen mit geringer Auflösung, kann die Anzieleinheit 3 auch um beide Achsen 7, 9 diskontinuierlich, insbesondere schrittweise verschwenkt werden.

Die Entfernungsmessung kann mittels gepulster Messstrahlung, Laufzeitmessung und Waveform Digitizing (WFD) durchgeführt werden, wodurch eine hohe Messrate von 1 Million Messungen und mehr pro Sekunde möglich ist. Denkbar wäre auch eine Phasenmessung oder eine Phasenmessung mit Waveform Digitizing in der hier beschriebenen Form einzusetzen.

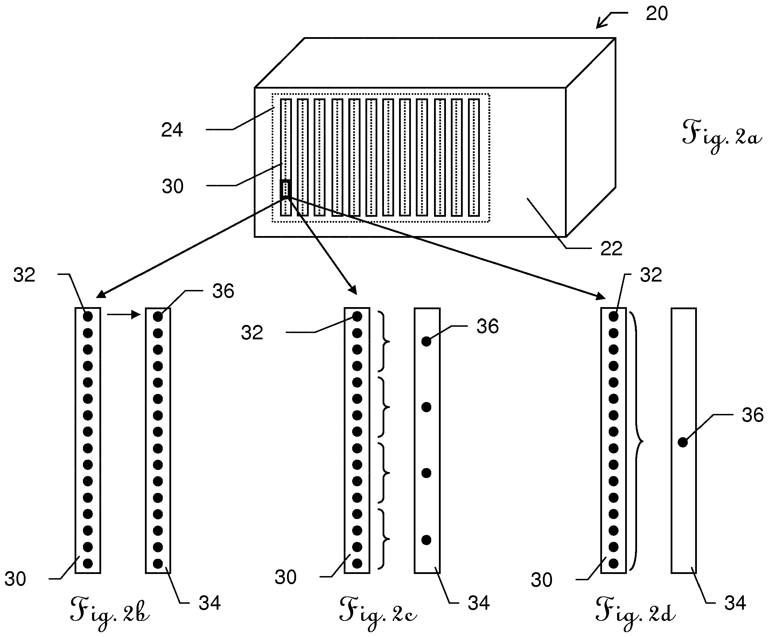

Als Ergebnis des Scannens ergibt sich eine Vielzahl von Messsignalen 32, die für die Auswertung in einem Zwischenspeicher gespeichert werden. In **Figur 2a** ist ein Beispiel eines Scanbereichs 24 auf einer zu scannenden Oberfläche 22 eines Objekts 20 gezeigt. Die Messsignale 32 können beispielsweise wie hier gezeigt in vertikalen Messsignalreihen 30 erfasst sein, wobei die einzelnen Messsignale 32_mittels WFD analysiert werden. Die Totalstation 1 weist eine Auswerteeinheit auf, welche jeweils aus einer in einer bestimmten Zeitperiode aufakkumulierten Anzahl Messsignalen (abhängig vom gewählten Scanmodus) eine Entfernung ermittelt und zusammen mit den zugehörigen Raumwinkeldaten als Scanpunkt 36 in einem Hauptspeicher ablegt. Der Hauptspeicher kann Bestandteil der Totalstation 1 sein (nicht dargestellt) oder ein externer Hauptspeicher sein. Dabei kann beispielsweise in Abhängigkeit von Parametern wie Entfernung zu dem zu scannenden Objekt und/oder von Anforderungen des Nutzers wie z.B. Auflösung, Messdistanz, Messgeschwindigkeit oder Messgenauigkeit über eine unterschiedliche Anzahl von - in diesem Beispiel einer Reihe liegenden - Messsignalen 32 gemittelt werden, um einen einzelnen Scanpunkt 36 für eine Punktwolke zu erhalten, wie dies anhand der Figuren 2b bis 2c für konstante Auflösung graphisch dargestellt und erläutert ist (s.u.).

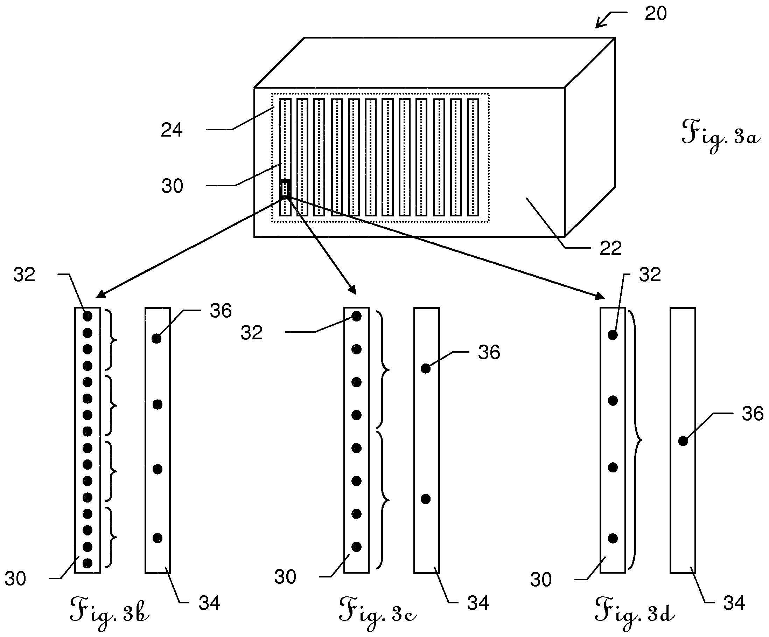

**Figur 3a** zeigt das Objekt 20 mit der im Scanbereich 24 zu vermessenden Oberfläche 22 aus Figur 2a. In den Figuren 3b bis 3d sind allerdings Scanmodi mit unterschiedlicher Auflösung graphisch dargestellt und erläutert (s.u.). Erfindungsgemäss weist die Totalstation 1 eine Programmspeichereinheit auf, die wenigstens zwei unterschiedliche Scanmodi bereitstellt. Diese wenigstens zwei Scanmodi unterscheiden sich wenigstens in ihrer Messrate, das heißt in der Anzahl Messsignale 32, über die pro Scanpunkt 36 gemittelt wird bzw. in der Zeitperiode (0.001s; 0.002s, 0.004s, 0.008s, 0.016s), über welche Messsignale 32 aufkumuliert werden, um aus ihnen die Entfernung zum Objekt zu ermitteln, oder mit anderen Worten in der Anzahl Scanpunkte 36, die pro Zeiteinheit generiert wird.

In den Beispielen der Figuren 2a-2d wird mit einer konstanten Pulsrate von 1 Million Laserpulsen pro Sekunde und mit konstanter, in diesem Beispiel zumindest in vertikaler Richtung kontinuierlicher Scangeschwindigkeit der Scanbereich 24 auf der Oberfläche 22 des Objekts 22 abgescannt, welches eine Oberfläche n konstanter Entfernung aufweist. Hierdurch ergeben sich Messsignalreihen 30 mit Messsignalen 32. Es werden nun immer über die gleiche Zeitperiode, die abhängig vom Scanmodus ist, Messsignale 32 der Messsignalreihe 30 aufkumuliert und hieraus die Distanz zum Objekt ermittelt und die zugehörigen Raumwinkel zugeordnet, um einen Scanpunkt 36 zu erhalten. Statt der Messsignalreihen 30 könnten natürlich auch Messsignalfelder definierter Geometrie und Größe und somit einer definierten Anzahl und Verteilung von Messsignalen herangezogen werden, um einen Scanpunkt zu ermitteln.

In den **Figuren 2b-2d** ist jeweils ein Ausschnitt einer Messsignalreihe 30 mit entsprechendem Ausschnitt einer Scanpunktreihe 34 einer Punktwolke bei unterschiedlich ausgewählten Scanmodi gezeigt.

In **Figur 2b** ist das Ergebnis eines ersten Scanmodus (Scanmodus 1) dargestellt: Der Scanbereich 24 wird mit einer Messrate von 1000 Scanpunkten pro Sekunde erfasst. Das bedeutet, dass für jeden Scanpunkt 36 bei einer Pulsrate der emittierten Messstrahlung von 1 Millionen Pulsen pro Sekunde im Idealfall, wenn alle ausgesandten Pulse zu einem verwertbaren Messsignal führen, 1000 Messsignale 32 akkumuliert werden für die Ermittlung eines Entfernungsmesswerts.

In **Figur 2c** ist das Ergebnis eines weiteren Scanmodus (Scanmodus 2) dargestellt, bei dem der Scanbereich 24 mit einer Messrate von 250 Scanpunkten pro Sekunde erfasst wird. Das bedeutet, dass hier bei gleicher Pulsrate die Anzahl Messsignale, welche pro Scanpunkt für die Entfernungsbestimmung aufkumuliert werden, viermal höher ist als im Beispiel aus Figur 2b, was entsprechend durch die Anzahl Punkte welche Messsignale 32 repräsentieren und in Scanpunkte 36 überführt werden angedeutet ist .

In **Figur 2d** ist das Ergebnis eines weiteren Scanmodus (Scanmodus 3) dargestellt, bei dem der Scanbereich 24 mit einer Messrate von 62 Scanpunkten pro Sekunde erfasst wird, so dass hier im Idealfall die 16-fache Anzahl Messsignale - verglichen mit Scanmodus 1 - für die Ermittlung der Entfernung aufkummuliert wird. Da für die Scanpunkte 36 im Beispiel der Figur 2b über die kürzeste Zeitperiode und also bei gleicher, konstanter Pulsrate der Messstrahlung die geringste Anzahl Messsignale für die Entfernungsermittlung aufkumuliert wird, ist die Genauigkeit jedes einzelnen Scanpunktes 36 in diesem Beispiel geringer als die Genauigkeit der Scanpunkte 36 in den Beispielen 2c und 2d. Auch die benötigte Speicherkapazität im Hauptspeicher nimmt vorteilhafter Weise entsprechend vom Beispiel 2b zum Beispiel 2d hin ab. Die Winkelgeschwindigkeit der Anzieleinheit wird für jeden Scanmodus über einen Algorithmus von der Steuer- und Verarbeitungseinheit jeweils distanzabhängig automatisch optimiert.

In den **Figuren 3b-3d** ist in analoger Darstellung zu den Figuren 2b-2d eine graphische Darstellung gezeigt von Ausschnitten unterschiedlicher Messsignalreihen 30, aufgenommen an dem Objekt 20, in konstanter Entfernung aber mit unterschiedlicher Auflösung, d.h. mit unterschiedlich schneller Scanbewegung der Anzieleinheit 3 bzw. der Messstrahlung 5. Für eine Messtrecke definierter Länge bedeutet dies bei jeweils gleicher Pulsrate der ausgesandten Messstrahlung, dass die Anzahl der durch den Detektor erfassten Messsignale 32 aufgenommen auf dieser Messstrecke umso geringer ist, je schneller die Scanbewegung ist. Bei gleicher Auswertung und Überführung der Messsignale 32 in Scanpunkte 36 für eine Punktwolke, nämlich in den hier gezeigten Beispielen 3b bis 3d jeweils mit einer Messrate von 250 Scanpunkten 36 pro Sekunde oder mit anderen Worten einer Aufakkumulierung von Messsignalen über Zeitperioden von jeweils 0.004s, ergibt sich dementsprechend für die schnelleren Scanbewegung eine geringere Anzahl Scanpunkte 36 pro Messstrecke, wie dies in den Figuren 3b bis 3d deutlich zu erkennen ist. Die Geschwindigkeit der Scanbewegung der Anzieleinheit 3 bzw. der Messstrahlung 5 ist in Figur 3b am geringsten und in Figur 3d am höchsten.

Die Auswahl aus den durch die Programmspeichereinheit bereitgestellten Scanmodi kann entweder direkt durch den Nutzer oder automatisch erfolgen.

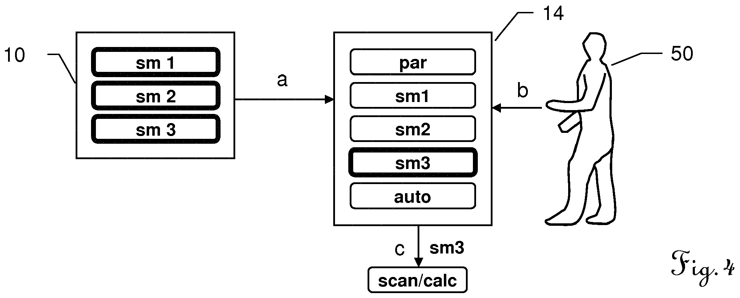

In den **Figuren 4-9** sind graphische Darstellungen von unterschiedlichen möglichen erfindungsgemässen Auswahlvorgängen eines Scanmodus zur Durchführung eines erfindungsgemässen Scanverfahrens gezeigt.

**Figur 4** zeigt eine Programmspeichereinheit 10, welche drei Scanmodi, Scanmodus 1 (sm1), Scanmodus 2 (sm2) und Scanmodus 3 (sm3), bereitstellt. In der Programmspeichereinheit kann optional auch ein Standardscanbereich ablegt sein, der abgestimmt auf das Hauptanwendungsgebiet des Gerätes definiert sein kann, und auf das jeweils dann von der Steuerungs- und Verarbeitungseinheit zugegriffen wird, wenn vom Nutzer kein anderer Scanbereich vorgegeben wird. Die Information über die zur Verfügungstellung der Scanmodi sm1, sm2 und sm3 wird in Schritt a an eine Bedieneinheit 14 übermittelt, mittels derer ein Nutzer 50 einen Scanmodus aus sm1, sm2 und sm3 auswählen kann. Zur Unterstützung des Nutzers in seiner Wahl des passenden Scanmodus können bei der zur Verfügungstellung der Scanmodi mittels der Bedieneinheit jeweils Informationen über die Messrate des Scanmodus, die mit dem Scanmodus erzielbare Genauigkeit der Messung und auch über die Distanz zum Objekt, bei der der Scanmodus sinnvoll eingesetzt werden kann, angezeigt werden. In Schritt b wählt der Nutzer 50 mittels der Bedieneinheit 14, beispielsweise durch Spracheingabe, Tastendruck oder mittels Touch-Screen, einen der bereitgestellten Scanmodi (im hier gezeigten Beispiel sm3) aus.

Mittels der Bedieneinheit 14 kann neben der Auswahl eines bereitgestellten Scanmodus auch die Eingabe wenigstens eines Parameters (par) und/oder die Auswahl einer automatischen Auswahlfunktionalität (auto) durch den Nutzer 50 erfolgen. Der Parameter kann dabei folgendes sein: eine geschätzte oder gemessene Entfernung zum Objekt; eine Pulsrate der Messstrahlung (z.B. Anzahl Laserpulse der Messstrahlung pro Sekunde); einen Scanbereich (beispielsweise durch Eingabe der Winkelkoordinaten der Eckpunkte des Scanbereichs oder einer Startkoordinate und davon ausgehenden Längen-und Breitenangaben); eine Messgeschwindigkeit (beispielsweise Eingabe der Winkelgeschwindigkeit der Scanbewegung oder in Kombination mit einer Eingabe oder Messung der Entfernung zum Objekt eine Eingabe von cm/sec oder m/sec), wobei die Messgeschwindigkeit azimutal (Schwenkachse) und vertikal (Kippachse) unabhängig voneinander einstellbar sind; eine Auflösung (z.B. Scanpunktdichte pro gescanntem Flächenbereich) oder beispielsweise eine absolute Scandauer (=Gesamscandauer) in Kombination mit dem gewünschten Scanbereich oder dem Standardscanbereich. Auch die Eingabe der gewünschten Messrate ist möglich, wobei durch die Steuer- und Verarbeitungseinheit dann die Messgenauigkeit bzw. die maximale Distanz zum Objekt ermittelt, die mit dieser Messrate noch sinnvoll messbar ist, und diese Informationen dem Nutzer über die Bedieneinheit zur Verfügung stellt. Die Information über die Auswahl des Scanmodus und - falls eine Parametereingabe erfolgt ist (nicht gezeigt) - der eingegebene Parameter werden dann an die Steuerungs- und Verarbeitungseinheit übermittelt (nicht gezeigt), wodurch in Schritt c die Scanfunktionalität (scan) der Totalstation 1 bzw. die Ausrichtung der Anzieleinheit 3 und die Auswertung (calc) entsprechend des ausgewählten Scanmodus sm3 durchgeführt wird. Die Winkelgeschwindigkeit der Anzieleinheit wird dabei für den gewählten Scanmodus über einen Algorithmus von der Steuer- und Verarbeitungseinheit jeweils distanzabhängig automatisch optimiert. Für die Ausführung des Scanmodus greift die Steuer- und Verarbeitungseinheit auf den in der Programmspeichereinheit 10 abgelegten Scanmodus sm3 zu. Dies kann dadurch erfolgen, dass das gesamte als Scanmodus sm3 abgelegte Steuer- und Auswertungsprogramm in den internen Speicher der Steuer- und Verarbeitungseinheit geladen wird, oder dadurch, dass zumindest jene Programmteile, die schnell ablaufen, in den internen Speicher geladen werden. Ebenfalls möglich aber für schnelle Scans zum Teil weniger geeignet, ist eine Konfiguration, bei der die Steuer- und Verarbeitungseinheit alle erforderlichen Informationen kontinuierlich aus der Programmspeichereinheit bezieht ohne das Programm oder Teile des Programms "Scanmodus sm3" in einen internen Speicher zu laden.

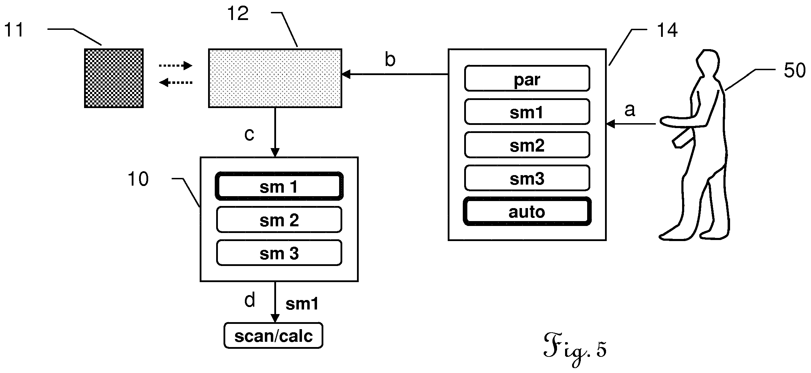

**Figur 5** zeigt eine graphische Darstellung eines weiteren möglichen erfindungsgemässen Auswahlvorgangs eines Scanmodus zur Durchführung eines erfindungsgemässen Scanverfahrens. In Schritt a wählt der Nutzer 50 mittels der Bedieneinheit 14 die automatische Auswahlfunktionalität. Das bedeutet, dass die Auswahl des optimal geeigneten Scanmodus im Zusammenhang mit dem Standardscanbereich zur Durchführung der Scanfunktionalität der Totalstation 1 automatisch mittels Steuerungs- und Verarbeitungseinheit 12 erfolgt. Dazu wird die Information über die Auswahl der automatischen Auswahlfunktionalität in Schritt b an die Steuerungs- und Verarbeitungseinheit 12 übermittelt. Die Steuerungs- und Verarbeitungseinheit 12 steuert die Ermittlung von für die Auswahl des geeigneten Scanmodus erforderlichen Parametern, z.B. die Messung der Entfernung zum Objekt mittels einer Entfernungsmesseinheit 11 in Einzelmessung oder Grobscan, wobei die Entfernungsmesseinheit 11 mittels der Steuerungs- und Verarbeitungseinheit 12 angesteuert und die mittels der Entfernungsmesseinheit 11 ermittelte Entfernung zum Objekt an die Steuerungs- und Verarbeitungseinheit 12 übermittelt wird (angedeutet durch die gepunkteten Pfeile). Die Entfernungsmessung mittels der Entfernungsmesseinheit 11 kann vor oder während des Scannens erfolgen. Abhängig von den ermittelten Parametern wird in Schritt c mittels der Steuerungs- und Verarbeitungseinheit 12 aus den von der Programmspeichereinheit 10 bereitgestellten Scanmodi sm1, sm2 und sm3 der optimal geeignete Scanmodus (im hier gezeigten Beispiel sm1) ausgewählt. Unter dem Begriff "optimal geeigneter Scanmodus" ist in diesem Zusammenhang der Scanmodus zu verstehen, mit dem unter Berücksichtigung des/der bestimmten Parameter das bestmögliche, sprich optimale Scanergebnis hinsichtlich, Messdistanz, Messgeschwindigkeit, Messgenauigkeit und Auflösung erzielbar ist. Die Information über die Auswahl des Scanmodus wird dann an die Steuerungs- und Verarbeitungseinheit übermittelt (nicht gezeigt) und optional dem Nutzer über die Bedieneinheit 14 angezeigt. In Schritt d wird dann entsprechend des als optimal erkannten Scanmodus die Scanfunktionalität (scan) der Totalstation 1 bzw. die Ausrichtung der Anzieleinheit 3 und die Auswertung (calc) entsprechend des ausgewählten Scanmodus sm1 durchgeführt.

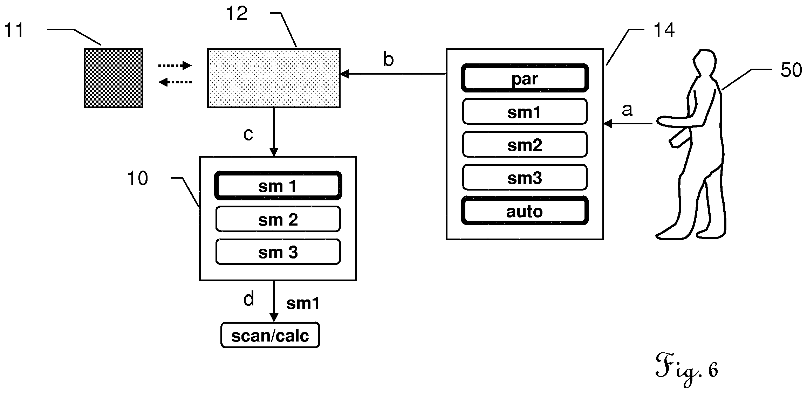

**Figur 6** zeigt eine graphische Darstellung eines weiteren möglichen erfindungsgemässen Auswahlvorgangs eines Scanmodus zur Durchführung eines erfindungsgemässen Scanverfahrens. In Schritt a wählt der Nutzer 50 mittels der Bedieneinheit 14 die automatische Auswahlfunktionalität und gibt zusätzlich mittels der Bedieneinheit 14 wenigstens einen der folgenden Parameter ein: eine geschätzte oder gemessene Entfernung zum Objekt, eine Pulsrate der Messstrahlung, ein Scanbereich, eine Messgeschwindigkeit, eine Auflösung oder eine Scandauer. Die Information über die Auswahl der automatischen Auswahlfunktionalität und der wenigstens eine eingegebene Parameter werden in Schritt b an die Steuerungs- und Verarbeitungseinheit 12 übermittelt. In Abhängigkeit von dem wenigstens einen Parameter steuert die Steuerungs- und Verarbeitungseinheit 12 falls erforderlich die Ermittlung weiterer für die Auswahl des geeigneten Scanmodus erforderlicher Parameter. Wurde beispielsweise durch den Nutzer 50 eine bestimmte Auflösung eingegeben, so kann es erforderlich sein, für die Auswahl des geeigneten Scanmodus zusätzlich eine Messung der Entfernung zum Objekt mittels der Entfernungsmesseinheit 11 durchzuführen, wie bereits für Figur 4 ausgeführt. Aufgrund der zur Verfügung stehenden Parameter (durch den Nutzer eingegeben und optional automatisch vom Gerät ermittelt) wird in Schritt c mittels der Steuerungs- und Verarbeitungseinheit 12 aus den von der

Programmspeichereinheit 10 bereitgestellten Scanmodi sm1, sm2 und sm3 der optimal geeignete Scanmodus (im hier gezeigten Beispiel Scanmodus 1) ausgewählt. Dementsprechend wird in Schritt d die Scanfunktionalität (scan) der Totalstation 1 bzw. die Ausrichtung der Anzieleinheit 3 und die Auswertung (calc) entsprechend des ausgewählten Scanmodus sm1 durchgeführt.

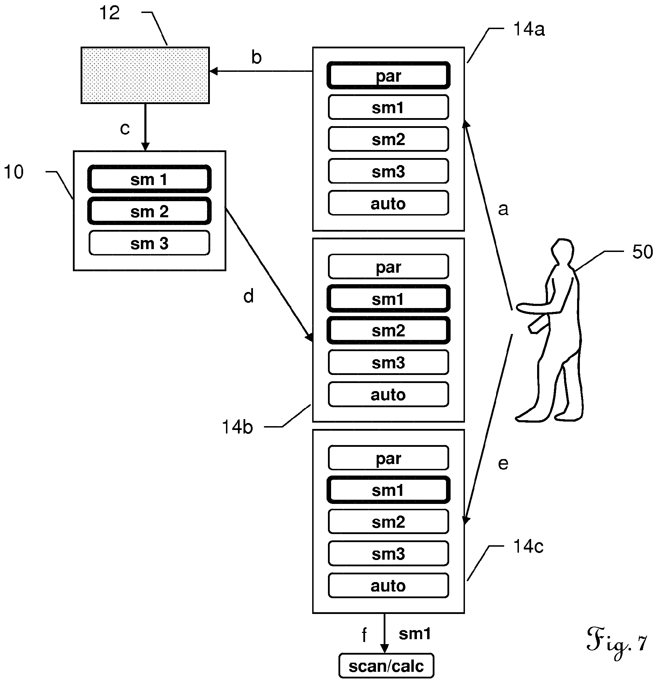

**Figur 7** zeigt eine graphische Darstellung eines weiteren möglichen erfindungsgemässen Zur-Verfügung-Stellens eines Scanmodus zur Durchführung eines erfindungsgemässen Scanverfahrens. Zwecks besserer Erkennbarkeit ist die Bedieneinheit 14 in dieser Darstellung für die verschiedenen Schritte a, b sowie d und e, f jeweils separat dargestellt und mit 14a, 14b, 14c bezeichnet, wobei es sich aber natürlich immer um dieselbe Bedieneinheit 14 handelt. In Schritt a gibt der Nutzer 50 mittels der Bedieneinheit 14a wenigstens einen der bereits in der Beschreibung der Figur 5 aufgeführten Parameter ein. Der wenigstens eine Parameter wird in Schritt b an die Steuerungs- und Verarbeitungseinheit 12 übermittelt. In Abhängigkeit von dem wenigstens einen Parameter werden in Schritt c mittels der Steuerungs- und Verarbeitungseinheit 12 aus den von der Programmspeichereinheit 10 bereitgestellten Scanmodi sm1, sm2 und sm3 sinnvoll verwendbare Scanmodi (im hier gezeigten Beispiel Scanmodi 1 und 2) ausgewählt und in Schritt d dem Nutzer 50 über die Bedieneinheit 14b zur Verfügung gestellt. Unter dem Begriff "sinnvoller Scanmodus" ist in diesem Zusammenhang ein Scanmodus zu verstehen, mit dem unter Berücksichtigung des wenigstens einen Parameters ein zufrieden stellendes Scanergebnis, sprich ein Scanergebnis mit einer hinreichenden Messgenauigkeit und/oder Auflösung erzielbar ist. In Schritt e wählt der Nutzer 50 nun mittels der Bedieneinheit 14c einen der zur Verfügung gestellten Scanmodi (im hier gezeigten Beispiel Scanmodus 1) aus. Die Information über die Auswahl des Scanmodus wird dann an die Steuerungs- und Verarbeitungseinheit übermittelt (nicht gezeigt), wodurch in Schritt f die Scanfunktionalität (scan) der Totalstation 1 bzw. die Ausrichtung der Anzieleinheit 3 und die Auswertung (calc) entsprechend des ausgewählten Scanmodus sm1 durchgeführt wird.

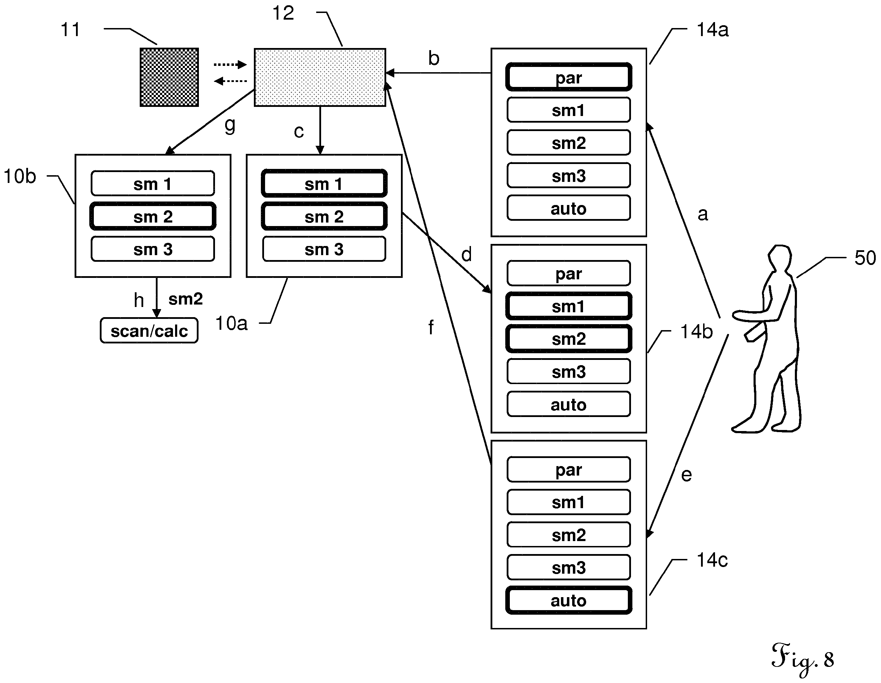

**Figur 8** zeigt analog zur Darstellung in Figur 7 eine graphische Darstellung eines weiteren möglichen erfindungsgemässen Zur-Verfügung-Stellens eines Scanmodus zur Durchführung eines erfindungsgemässen Scanverfahrens. In Schritt a gibt der Nutzer 50 mittels der Bedieneinheit 14a wenigstens einen der bereits in der Beschreibung der Figur 5 aufgeführten Parameter ein. Der wenigstens eine Parameter wird in Schritt b an die Steuerungs- und Verarbeitungseinheit 12 übermittelt. In Abhängigkeit von dem wenigstens einen Parameter werden in Schritt c mittels der Steuerungs- und Verarbeitungseinheit 12 aus den von der Programmspeichereinheit 10a bereitgestellten Scanmodi sm1, sm2 und sm3 die sinnvollen Scanmodi (im hier gezeigten Beispiel Scanmodi 1 und 2) ausgewählt und zusammen mit der automatischen Auswahlfunktionalität auto in Schritt d dem Nutzer 50 über die Bedieneinheit 14b zur Verfügung gestellt. In Schritt e wählt der Nutzer 50 nun mittels der Bedieneinheit 14c die automatische Auswahlfunktionalität aus. Die Information über die Auswahl der automatischen Auswahlfunktionalität wird in Schritt f an die Steuerungs- und Verarbeitungseinheit 12 übermittelt. Unter Berücksichtigung des wenigstens einen in Schritt a durch den Nutzer eingegebenen Parameters steuert die Steuerungs- und Verarbeitungseinheit 12 falls erforderlich die Ermittlung weiterer für die Auswahl des geeigneten Scanmodus erforderlicher Parameter. Aufgrund der zur Verfügung stehenden Parameter (durch den Nutzer eingegeben und optional automatisch vom Gerät ermittelt) wird in Schritt g mittels der Steuerungs- und Verarbeitungseinheit 12 aus den von der Programmspeichereinheit 10b zur Verfügung gestellten Scanmodi sm1 und sm2 der optimal geeignete Scanmodus (im hier gezeigten Beispiel Scanmodus 2) ausgewählt. In Schritt h wird die Scanfunktionalität (scan) der Totalstation 1 bzw. die Ausrichtung der Anzieleinheit 3 und die Auswertung (calc) entsprechend des ausgewählten Scanmodus sm2 durchgeführt.

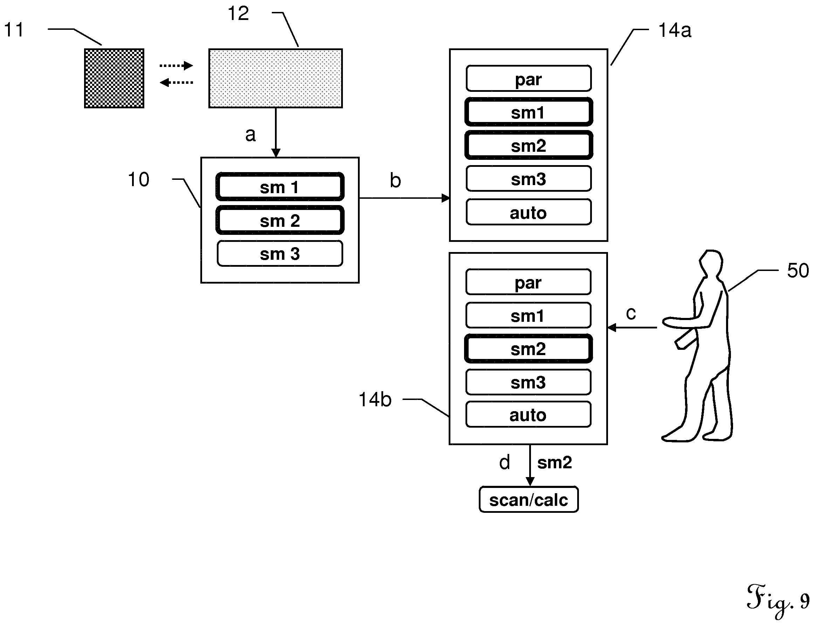

**Figur 9** zeigt analog zur Darstellung in Figur 7 eine graphische Darstellung eines weiteren möglichen erfindungsgemässen Zur-Verfügung-Stellens eines Scanmodus zur Durchführung eines erfindungsgemässen Scanverfahrens. Vor dem Scannen wird mittels der Entfernungsmesseinheit 11 eine Entfernungsmessung zu dem zu vermessenden Objekt durchgeführt, wie oben für Figur 4 ausgeführt. In Abhängigkeit von der gemessenen Entfernung werden in Schritt a mittels der Steuerungs- und Verarbeitungseinheit 12 aus den von der Programmspeichereinheit 10 bereitgestellten Scanmodi sm1, sm2 und sm3 die sinnvollen Scanmodi (im hier gezeigten Beispiel Scanmodi 1 und 2) ausgewählt und in Schritt b dem Nutzer 50 über die Bedieneinheit 14a zur Verfügung gestellt. In Schritt c wählt der Nutzer 50 nun mittels der Bedieneinheit 14b einen der zur Verfügung gestellten Scanmodi (im hier gezeigten Beispiel Scanmodus 2) aus. Die Information über die Auswahl des Scanmodus wird dann an die Steuerungs- und Verarbeitungseinheit übermittelt (nicht gezeigt), wodurch in Schritt d die Scanfunktionalität (scan) der Totalstation 1 bzw. die Ausrichtung der Anzieleinheit 3 und die Auswertung (calc) entsprechend des ausgewählten Scanmodus sm2 durchgeführt wird.

In den oben gegebenen Ausführungen sind verschiedene Details beispielhaft einzeln oder in Kombination miteinander gezeigt und/oder beschrieben worden. Dies bedeutet jedoch nicht, dass diese nur in der gezeigten und/oder beschriebenen Form miteinander kombiniert werden können. Der Fachmann weiss, in welcher Weise sich Details der vorangehend gezeigten und/oder beschriebenen Ausführungsformen der Erfindung sinnvoll miteinander kombinieren lassen, auch wenn hier aus Platzgründen nicht alle Kombinationen dargestellt werden konnten.

## Patentansprüche

1. Totalstation (1), mit
• einer Basis (2);
• einem auf der Basis (2) angeordneten und relativ zur Basis (2) um eine Schwenkachse (7) schwenkbaren Aufbau (4);
• einer im Aufbau (4) angeordneten Anzieleinheit (3), die relativ zum Aufbau (4) um eine senkrecht zur Schwenkachse (7) stehenden Kippachse (9) schwenkbar ist;
• einer Winkelmesseinrichtung;
• einer Steuerungs- und Verarbeitungseinheit (12);
• einer elektro-optischen Entfernungsmesseinheit (11) zur Entfernungsmessung zu Punkten auf einem Objekt, wobei die Entfernungsmesseinheit (11) eine Emissionseinheit zur Emission einer gepulsten Messstrahlung (5) aufweist, die mittels der Anzieleinheit (3) aussendbar ist, und einen Detektor zum Empfang der an den Punkten auf dem Objekt reflektierten Messstrahlung aufweist, der die empfangene Messstrahlung in Form von Messsignalen (32) erfasst;
• einer Scanfunktionalität, die mittels der Steuerungs- und Verarbeitungseinheit (12) derart steuerbar ist, dass mittels Entfernungsmesseinheit die Entfernungsmessung zu Punkten auf einem Objekt scannend ausführbar ist und dabei erfasste Messsignale (32) mittels einer Auswerteeinheit ausgewertet und in Scanpunkte (36) überführbar sind, wobei für jeden Scanpunkt aus den Messsignalen (32) unter Zuordnung zweier Raumwinkel eine Entfernung zum Objekt ermittelbar ist, so dass aus den Scanpunkten (36) eine das Objekt darstellende Punktwolke erzeugbar ist,
**dadurch gekennzeichnet, dass**
• die Entfernungsmesseinheit (11) derart konfiguriert ist, dass die Entfernungsmessung mittels Laufzeitmessung und Waveform Digitizing (WFD) durchführbar ist, und
• die Totalstation (1) eine wenigstens zwei Scanmodi bereitstellende Programmspeichereinheit (10) aufweist, wobei sich die wenigstens zwei Scanmodi wenigstens in ihrer Messrate, das heisst in der Anzahl erhaltener Scanpunkte pro Zeiteinheit unterscheiden.

2. Totalstation (1) nach Anspruch 1,
**dadurch gekennzeichnet, dass**
im Rahmen der Scanfunktionalität die Anzieleinheit (3) um die Kippachse (9) und/oder Schwenkachse (7) derart schwenkbar ist, dass die emittierte, gepulste Messstrahlung (5) zumindest schwenkbar um eine der beiden Achsen kontinuierlich ausrichtbar ist.

3. Totalstation (1) nach Anspruch 1 oder 2,
**dadurch gekennzeichnet, dass**
mittels der Programmspeichereinheit (10) wenigstens zwei Scanmodi bereitstellbar sind, ausgewählt aus einer Gruppe von Scanmodi wenigstens enthaltend:
• Scanmodus 0 mit einer Messrate von 100'000 Scanpunkten pro Sekunde
• Scanmodus 1 mit einer Messrate von 1000 Scanpunkten pro Sekunde
• Scanmodus 2 mit einer Messrate von 250 Scanpunkten pro Sekunde, und
• Scanmodus 3 mit einer Messrate von 62 Scanpunkten pro Sekunde;
• Scanmodus 4 mit einer automatischen Anpassung der Messrate an die aktuell gemessene Entfernung zum Objekt.

4. Totalstation (1) nach einem der Ansprüche 1 bis 3,
**dadurch gekennzeichnet, dass**
die Totalstation (1) eine Bedieneinheit (14) aufweist
• zum Eingeben wenigstens eines Parameters, wobei der Parameter folgendes sein kann: eine geschätzte oder gemessene Entfernung zum Objekt, eine Pulsrate der Messstrahlung, ein Scanbereich, eine Winkelgeschwindigkeit der Anzieleinheit, eine Auflösung oder eine Gesamtscandauer; und/oder
• zur Auswahl eines Scanmodus oder einer automatischen Auswahlfunkionalität
durch den Nutzer (50).

5. Totalstation (1) nach einem der Ansprüche 1 bis 4,
**dadurch gekennzeichnet, dass**
die Auswahl eines Scanmodus aus den wenigstens zwei mittels der Programmspeichereinheit (10) bereitstellbaren Scanmodi durch einen Nutzer (50) manuell oder mittels der Steuerungs- und Verarbeitungseinheit (12) automatisch durchführbar ist.

6. Totalstation (1) nach einem der Ansprüche 4 oder 5,
**dadurch gekennzeichnet, dass**
die mit der Bedieneinheit (14) und der Programmspeichereinheit (10) gekoppelte Steuerungs- und Verarbeitungseinheit (12) derart konfiguriert ist, dass in Abhängigkeit des mittels der Bedieneinheit (14) eingegebenen, wenigstens einen Parameters aus den wenigstens zwei durch die Programmspeichereinheit (10) bereitgestellten Scanmodi wenigstens ein Scanmodus zur Verfügung stellbar ist.

7. Verfahren zum Erzeugen einer Scanpunkte aufweisenden Punktwolke mittels einer Totalstation nach einem der Ansprüche 1 bis 6 betrieben in ihrer Scanfunktionalität,
**dadurch gekennzeichnet, dass**
• mittels einer Programmspeichereinheit (10) wenigstens zwei Scanmodi bereitgestellt werden, wobei sich die zwei Scanmodi wenigstens in einer Messrate, das heisst in der Anzahl der ermittelten Scanpunkte pro Zeiteinheit unterscheiden, dass
• aus den bereitgestellten Scanmodi ein Scanmodus ausgewählt und während des Scannens ausgeführt wird.

8. Verfahren nach Anspruch 7,
**dadurch gekennzeichnet, dass**
mittels der Programmspeichereinheit (10) wenigstens zwei Scanmodi bereitgestellt werden, ausgewählt aus einer Gruppe von Scanmodi wenigstens enthaltend:
• Scanmodus 1 mit einer Messrate von 1000 Scanpunkten pro Sekunde;
• Scanmodus 2 mit einer Messrate von 250 Scanpunkten pro Sekunde;
• Scanmodus 3 mit einer Messrate von 62 Scanpunkten pro Sekunde;
• Scanmodus 4 mit einer automatischen Anpassung der Messrate an die aktuell gemessene Entfernung zum Objekt.

9. Verfahren nach Anspruch 7 oder 8,
**dadurch gekennzeichnet, dass**
eine Auswahl eines Scanmodus aus den wenigstens zwei Scanmodi durch einen Nutzer (50) erfolgt.

10. Verfahren nach Anspruch 7 oder 8,
**dadurch gekennzeichnet, dass**
• vor dem Scannen eine Entfernungsmessung zu wenigstens einem Punkt auf einem Objekt erfolgt in Form einer Einzelpunktmessung oder eines Pre-Scans, oder wenigstens ein Parameter eingegeben wird, wobei der Parameter folgendes sein kann:
eine geschätzte oder gemessene Entfernung zum Objekt, eine Pulsrate der Messstrahlung, ein Scanbereich, eine Winkelgeschwindigkeit der Anzieleinheit, eine Auflösung oder eine Gesamtscandauer,
• mittels einer Steuerungs- und Verarbeitungseinheit (12) aus den von der Programmspeichereinheit (10) bereitgestellten Scanmodi wenigstens ein Scanmodus in Abhängigkeit von dem wenigstens einen Parameter oder der gemessenen Entfernung ausgewählt und einem Nutzer (50) zur Verfügung gestellt wird, und
• eine Auswahl eines Scanmodus aus dem wenigstens einen zur Verfügung gestellten Scanmodus durch den Nutzer (50) erfolgt.

11. Verfahren nach Anspruch 7 oder 8,
**dadurch gekennzeichnet, dass**
• vor dem Scannen eine Entfernungsmessung zu wenigstens einem Punkt auf einem Objekt erfolgt, oder wenigstens ein Parameter eingegeben wird, wobei der Parameter folgendes sein kann: eine geschätzte oder gemessene Entfernung zum Objekt, eine Pulsrate der Messstrahlung, ein Scanbereich, eine Winkelgeschwindigkeit, eine Auflösung oder eine Gesamtscandauer,
• mittels einer Steuerungs- und Verarbeitungseinheit (12) aus den von der Programmspeichereinheit (10) bereitgestellten Scanmodi wenigstens ein Scanmodus in Abhängigkeit von der gemessenen Entfernung oder dem wenigstens einen eingegebenen Parameter ausgewählt und einem Nutzer (50) zur Verfügung gestellt wird,
• der Nutzer (50) eine Anweisung zur automatischen Auswahl eines Scanmodus gibt, und
• mittels der Steuerungs- und Verarbeitungseinheit ein optimal geeigneter Scanmodus aus dem wenigstens einen zur Verfügung gestellten Scanmodus ausgewählt wird, wobei die Auswahl des optimal geeigneten Scanmodus aufgrund einer Optimierung hinsichtlich Entfernung zum Objekt, Gesamtmessdauer, Messgenauigkeit und Auflösung erfolgt.

12. Verfahren nach Anspruch 7 oder 8,
**dadurch gekennzeichnet, dass**
• mittels einer Steuerungs- und Verarbeitungseinheit (12) aus den von der Programmspeichereinheit (10) bereitgestellten Scanmodi jeweils ein optimal geeigneter Scanmodus in Abhängigkeit von der aktuell während des Scannens gemessenen Entfernungen ausgewählt und zum Scannen verwendet wird,
• wobei die Auswahl des optimal geeigneten Scanmodus aufgrund einer Optimierung des Scannens hinsichtlich Entfernung zum Objekt, Gesamtmessdauer, Messgenauigkeit und Auflösung erfolgt.

13. Verfahren einem der Ansprüche 7 bis 12,
**dadurch gekennzeichnet, dass**
die erfassten Messsignaldaten online, das heisst während des Scannens ausgewertet und in Scanpunkte (36) für eine Punktwolke überführt werden.

14. Computerprogrammprodukt mit Programmcode, der auf einem maschinenlesbaren Träger gespeichert ist, zur Steuerung und Durchführung des Verfahrens zum Erzeugen einer Scanpunkte (36) aufweisenden Punktwolke nach einem der Ansprüche 7 bis 13, insbesondere wenn das Programm auf einer als Steuerungs- und Verarbeitungseinheit (12) einer Totalstation nach einem der Ansprüche 1 bis 6 ausgebildeten elektronischen Datenverarbeitungseinheit ausgeführt wird.

## Claims

1. Total station (1), having
- a base (2);
- a structure (4), which is arranged on the base (2) and is pivotable in relation to the base (2) about a pivot axis (7);
- an aiming unit (3), which is arranged in the structure (4) and is pivotable in relation to the structure (4) about a tilt axis (9) perpendicular to the pivot axis (7);
- an angle measuring unit;
- a control and processing unit (12);
- an electro-optical distance measuring unit (11) for measuring the distance to points on an object, wherein the distance measuring unit (11) has an emission unit for emitting pulsed measuring radiation (5), which can be emitted by means of the aiming unit (3), and a detector for receiving the measuring radiation reflected at the points on the object, which registers the received measuring radiation in the form of measuring signals (32);
- a scanning functionality, which is controllable by means of the control and processing unit (12) in such a manner that by means of the distance measuring unit, the distance measurement to points on an object is executable in a scanning manner and registered measuring signals (32) are analyzed by means of an analysis unit and convertible into scanning points (36), wherein a distance to the object can be ascertained for each scanning point from the measuring signals (32) with assignment of two spatial angles, so that a point cloud which represents the object can be generated from the scanning points (36),
**characterized in that**
- the distance measuring unit (11) is configured in such a manner that the distance measurement can be carried out by means of runtime measurement and waveform digitizing (WFD), and
- the total station (1) has a program storage unit (10) which provides at least two scanning modes, wherein the at least two scanning modes differ at least in their measuring rate, i.e., in the number of scanning points obtained per unit of time.

2. Total station (1) according to Claim 1,
**characterized in that,**
in the scope of the scanning functionality, the aiming unit (3) is pivotable about the tilt axis (9) and/or pivot axis (7) in such a manner that the emitted, pulsed measuring radiation (5) can be continuously aligned at least in a pivotable manner about one of the two axes.

3. Total station (1) according to Claim 1 or 2,
**characterized in that**
at least two scanning modes can be provided by means of the program storage unit (10), selected from a group of scanning modes at least containing:
- scanning mode 0 having a measuring rate of 100,000 scanning points per second
- scanning mode 1 having a measuring rate of 1000 scanning points per second
- scanning mode 2 having a measuring rate of 250 scanning points per second, and
- scanning mode 3 having a measuring rate of 62 scanning points per second;
- scanning mode 4 having an automatic adaptation of the measuring rate to the currently measured distance to the object.

4. Total station (1) according to any one of Claims 1 to 3,
**characterized in that**
the total station (1) has an operating unit (14)
- for the input of at least one parameter, wherein the parameter can be the following: an estimated or measured distance to the object, a pulse rate of the measuring radiation, a scanning region, an angular velocity of the aiming unit, a resolution, or a total scanning duration; and/or
- for the selection of a scanning mode or an automatic selection functionality
by the user (50).

5. Total station (1) according to any one of Claims 1 to 4,
**characterized in that**
the selection of a scanning mode from the at least two scanning modes which can be provided by means of the program storage unit (10) can be carried out by a user (50) manually or automatically by means of the control and processing unit (12).

6. Total station (1) according to any one of Claims 4 or 5,
**characterized in that**
the control and processing unit (12), which is coupled to the operating unit (14) and the program storage unit (10), is configured in such a manner that at least one scanning mode can be made available, depending on the at least one parameter input by means of the operating unit (14), from the at least two scanning modes provided by the program storage unit (10).

7. Method for generating a point cloud having scanning points by means of a total station according to any one of Claims 1 to 6 operated in its scanning functionality,
**characterized in that**
- at least two scanning modes are provided by means of a program storage unit (10), wherein the two scanning modes at least differ in a measuring rate, i.e., in the number of the scanning points ascertained per unit of time,
- one scanning mode is selected from the provided scanning modes and executed during the scanning.

8. Method according to Claim 7,
**characterized in that**
at least two scanning modes are provided by means of the program storage unit (10), selected from a group of scanning modes at least containing:
- scanning mode 1 having a measuring rate of 1000 scanning points per second;
- scanning mode 2 having a measuring rate of 250 scanning points per second;
- scanning mode 3 having a measuring rate of 62 scanning points per second;
- scanning mode 4 having an automatic adaptation of the measuring rate to the currently measured distance to the object.

9. Method according to Claim 7 or 8,
**characterized in that**
a selection of a scanning mode from the at least two scanning modes is performed by a user (50).

10. Method according to Claim 7 or 8,
**characterized in that**
- before the scanning, a distance measurement to at least one point on an object is performed in the form of a single point measurement or a pre-scan, or at least one parameter is input, wherein the parameter can be the following: an estimated or measured distance to the object, a pulse rate of the measuring radiation, a scanning region, an angular velocity of the aiming unit, a resolution, or a total scanning duration,
- at least one scanning mode is selected by means of a control and processing unit (12) from the scanning modes provided by the program storage unit (10) depending on the at least one parameter or the measured distance and is made available to a user (50), and
- a selection of a scanning mode from the at least one available scanning mode is performed by the user (50).

11. Method according to Claim 7 or 8,
**characterized in that**
- before the scanning, a distance measurement to at least one point on an object is performed, or at least one parameter is input, wherein the parameter can be the following: an estimated or measured distance to the object, a pulse rate of the measuring radiation, a scanning region, an angular velocity, a resolution, or a total scanning duration,
- at least one scanning mode is selected by means of a control and processing unit (12) from the scanning modes provided by the program storage unit (10) depending on the measured distance or the at least one input parameter and is made available to a user (50),
- the user (50) gives an instruction for the automatic selection of a scanning mode, and
- an optimum suitable scanning mode from the at least one available scanning mode is selected by means of the control and processing unit, wherein the selection of the optimum suitable scanning mode is performed on the basis of an optimization with respect to distance to the object, total measuring duration, measurement precision, and resolution.

12. Method according to Claim 7 or 8,
**characterized in that**
- respectively one optimum suitable scanning mode is selected, depending on the current distances measured during the scanning, by means of a control and processing unit (12) from the scanning modes provided by the program storage unit (10) and is used for scanning,
- wherein the selection of the optimum suitable scanning mode is performed on the basis of an optimization of the scanning with respect to distance to the object, total measuring duration, measurement precision, and resolution.

13. Method according to any one of Claims 7 to 12,
**characterized in that**
the registered measuring signal data are analyzed online, i.e., during the scanning, and converted into scanning points (36) for a point cloud.

14. Computer program product having program code which is stored on a machine-readable carrier, for controlling and carrying out the method for generating a point cloud having scanning points (36) according to any one of Claims 7 to 13, in particular when the program is executed on an electronic data processing unit implemented as a control and processing unit (12) of a total station according to any one of Claims 1 to 6.

## Revendications

1. Station totale (1), comprenant :
• une base (2) ;
• une construction (4) disposée sur la base (2) et susceptible de pivoter par rapport à la base (2) sur un axe de pivotement (7) ;
• une unité de visée (3) disposée dans la construction (4) et susceptible de pivoter par rapport à la construction (4) sur un axe de basculement (9) perpendiculaire à l'axe de pivotement (7) ;
• un dispositif de mesure des angles ;
• une unité de commande et de traitement (12) ;
• une unité électro-optique de mesure des distances (11) destinée à mesurer la distance par rapport à des points présents sur un objet, ladite unité de mesure des distances (11) présentant une unité d'émission destinée à émettre un rayonnement de mesure pulsé (5) pouvant être émis au moyen de l'unité de visée (3), et un détecteur destiné à recevoir le rayonnement de mesure réfléchi par les points présents sur l'objet et à capter sous forme de signaux de mesure (32) ce rayonnement de mesure reçu ;
• une fonctionnalité de balayage susceptible d'être commandée au moyen de l'unité de commande et de traitement (12) de manière à permettre à l'unité de mesure des distances de mesurer par balayage la distance par rapport aux points présents sur l'objet, les signaux de mesure (32) ainsi captés étant évalués au moyen d'une unité d'évaluation et pouvant être convertis en points de balayage (36), permettant ainsi de déterminer, pour chaque point de balayage, une distance par rapport à l'objet à partir des signaux de mesure (32) par affectation de deux angles dans l'espace, de manière à permettre la création, à partir des points de balayage (36), d'un nuage de points représentant l'objet,
**caractérisée en ce que**
• l'unité de mesure des distances (11) est configurée de manière à permettre la mesure de la distance au moyen d'une mesure du temps de propagation et d'une numérisation de forme d'onde, et
• la station totale (1) présente une unité d'enregistrement de programmes (10) proposant au moins deux modes de balayage, lesdits au moins deux modes de balayage se distinguant au moins par leur vitesse de mesure, c'est-à-dire le nombre de points de balayage obtenus par unité de temps.

2. Station totale (1) selon la revendication 1,
**caractérisée en ce que,**
dans le cadre de la fonctionnalité de balayage, l'unité de visée (3) peut subir un pivotement sur l'axe de basculement (9) et/ou sur l'axe de pivotement (7) de manière à permettre l'orientation continue du rayonnement de mesure pulsé (5) émis, au moins par pivotement sur un des deux axes.

3. Station totale (1) selon la revendication 1 ou 2,
**caractérisée en ce que**
l'unité d'enregistrement de programmes (10) peut proposer au moins deux modes de balayage, choisis dans un groupe de modes de balayage comprenant au moins :
• le mode de balayage 0 offrant une vitesse de mesure de 100.000 points de balayage par seconde
• le mode de balayage 1 offrant une vitesse de mesure de 1000 points de balayage par seconde
• le mode de balayage 2 offrant une vitesse de mesure de 250 points de balayage par seconde, et
• le mode de balayage 3 offrant une vitesse de mesure de 62 points de balayage par seconde ;
• le mode de balayage 4 offrant une adaptation automatique de la vitesse de mesure à la distance par rapport à l'objet en cours de mesure.

4. Station totale (1) selon l'une des revendications 1 à 3,
**caractérisée en ce que**
la station totale (1) présente une unité de commande (14) permettant à l'utilisateur (50) :
• de saisir au moins un paramètre, ledit paramètre pouvant être : une distance estimée ou mesurée par rapport à l'objet, une cadence d'impulsion du rayonnement de mesure, un domaine de balayage, une vitesse angulaire de l'unité de visée, une résolution ou une durée totale de balayage ; et/ou
• de choisir un mode de balayage ou une fonctionnalité de choix automatique.

5. Station totale (1) selon l'une des revendications 1 à 4,
**caractérisée en ce que**
le choix d'un mode de balayage parmi les au moins deux modes de balayage proposés par l'unité d'enregistrement de programmes (10) peut s'effectuer manuellement par l'utilisateur (50), ou automatiquement au moyen de l'unité de commande et de traitement (12).

6. Station totale (1) selon l'une des revendications 4 et 5,
**caractérisée en ce que**
l'unité de commande et de traitement (12) couplée à l'unité de commande (14) et à l'unité d'enregistrement de programmes (10) est configurée de manière que, en fonction de l'au moins un paramètre saisi au moyen de l'unité de commande (14), au moins un mode de balayage peut être mis à disposition parmi les au moins deux modes de balayage proposés par l'unité d'enregistrement de programmes (10).

7. Procédé d'obtention d'un nuage de points formé par des points de balayage, au moyen de la fonctionnalité de balayage d'une station totale selon l'une des revendications 1 à 6,
**caractérisé en ce que**
• une unité d'enregistrement de programmes (10) propose au moins deux modes de balayage, lesdits deux modes de balayage se distinguant au moins par une vitesse de mesure, c'est-à-dire un nombre de points de balayage obtenus par unité de temps, et
• un mode de balayage est choisi parmi les modes de balayage proposés, et exécuté lors du balayage.

8. Procédé selon la revendication 7,
**caractérisée en ce que**
l'unité d'enregistrement de programmes (10) propose au moins deux modes de balayage, choisis dans un groupe de modes de balayage comprenant au moins :
• le mode de balayage 1 offrant une vitesse de mesure de 1000 points de balayage par seconde ;
• le mode de balayage 2 offrant une vitesse de mesure de 250 points de balayage par seconde ;
• le mode de balayage 3 offrant une vitesse de mesure de 62 points de balayage par seconde ;
• le mode de balayage 4 offrant une adaptation automatique de la vitesse de mesure à la distance par rapport à l'objet en cours de mesure.

9. Procédé selon la revendication 7 ou 8,
**caractérisé en ce que**
l'utilisateur (50) choisit un mode de balayage parmi les au moins deux modes de balayage.

10. Procédé selon la revendication 7 ou 8,
**caractérisé en ce que**
• il est réalisé, avant le balayage, une mesure de la distance par rapport à au moins un point présent sur un objet, sous forme d'une mesure à point unique ou d'un prébalayage, ou bien il est saisi au moins un paramètre, ledit paramètre pouvant être : une distance estimée ou mesurée par rapport à l'objet, une cadence d'impulsion du rayonnement de mesure, un domaine de balayage, une vitesse angulaire de l'unité de visée, une résolution ou une durée totale de balayage,
• au moins un mode de balayage est choisi, au moyen d'une unité de commande et de traitement (12) et en fonction de l'au moins un paramètre ou de la distance mesurée, parmi les modes de balayage proposés par l'unité d'enregistrement de programmes (10), et mis à la disposition de l'utilisateur (50), et
• l'utilisateur (50) choisit un mode de balayage parmi l'au moins un mode de balayage mis à disposition.

11. Procédé selon la revendication 7 ou 8,
**caractérisé en ce que**
• il est réalisé, avant le balayage, une mesure de la distance par rapport à au moins un point présent sur un objet, ou bien il est saisi au moins un paramètre, ledit paramètre pouvant être : une distance estimée ou mesurée par rapport à l'objet, une cadence d'impulsion du rayonnement de mesure, un domaine de balayage, une vitesse angulaire, une résolution ou une durée totale de balayage,
• au moins un mode de balayage est choisi, au moyen d'une unité de commande et de traitement (12) et en fonction de la distance mesurée ou de l'au moins un paramètre saisi, parmi les modes de balayage proposés par l'unité d'enregistrement de programmes (10), et mis à la disposition de l'utilisateur (50),
• l'utilisateur (50) donne une consigne pour le choix automatique d'un mode de balayage, et
• un mode de balayage optimal est choisi, au moyen de l'unité de commande et de traitement, parmi l'au moins un mode de balayage mis à disposition, ce choix du mode de balayage optimal étant basé sur une optimisation concernant la distance par rapport à l'objet, la durée totale de la mesure, la précision de la mesure et la résolution.

12. Procédé selon la revendication 7 ou 8,
**caractérisé en ce que**
• un mode de balayage optimal est choisi, au moyen d'une unité de commande et de traitement (12) et en fonction des distances en cours de mesure pendant le balayage, parmi les modes de balayage proposés par l'unité d'enregistrement de programmes (10), et utilisé pour le balayage,
• ce choix du mode de balayage optimal étant basé sur une optimisation du balayage concernant la distance par rapport à l'objet, la durée totale de la mesure, la précision de la mesure et la résolution.

13. Procédé selon l'une des revendications 7 à 12,
**caractérisé en ce que**
les données des signaux de mesure captés sont évaluées en ligne, c'est-à-dire pendant le balayage, et converties en points de balayage (36) formant un nuage de points.

14. Produit logiciel, comportant un code logiciel enregistré sur un support lisible par une machine, destiné à commander et à exécuter le procédé selon l'une des revendications 7 à 13 d'obtention d'un nuage de points formé de points de balayage (36), notamment lorsque ledit logiciel est exécuté sur une unité de traitement électronique des données conçue sous la forme d'une unité de commande et de traitement (12) d'une station totale selon l'une des revendications 1 à 6.
